(19) Europäisches Patentamt
European Patent Office
Office européen des brevets

(11) EP 2 586 823 B1

(12) **EUROPEAN PATENT SPECIFICATION**

(45) Date of publication and mention of the grant of the patent:
**01.10.2014 Bulletin 2014/40**

(51) Int Cl.:
***C08L 23/10*** *(2006.01)* ***C08L 23/12*** *(2006.01)*
***C08L 23/14*** *(2006.01)*

(21) Application number: **11186695.0**

(22) Date of filing: **26.10.2011**

(54) **Heterophasic propylene copolymer comprising an external plastomeric olefin copolymer**

Heterophasiges Propylencopolymer mit einem externen plastomerischen Olefin-Copolymer

Copolymère de propylène hétérophasique comprenant un copolymère d'oléfine plastomère externe

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.05.2013 Bulletin 2013/18**

(73) Proprietor: **Borealis AG**
**1220 Vienna (AT)**

(72) Inventors:
- **Doshev, Petar**
**4040 Linz (AT)**
- **Tranninger, Cornelia**
**4055 Pucking (AT)**
- **Knall, Astrid-Caroline**
**8055 Graz (AT)**

(74) Representative: **Maiwald Patentanwalts GmbH**
**Elisenhof**
**Elisenstrasse 3**
**80335 München (DE)**

(56) References cited:
**EP-A1- 2 055 739**
**EP-A1- 2 368 937**
**EP-A1- 2 368 938**
**WO-A1-2010/006999**
**WO-A1-2010/142540**
**WO-A1-2011/080152**
**US-A1- 2006 009 586**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 586 823 B1

## Description

The present invention is directed to a new heterophasic propylene copolymer (HECO), its manufacture and use.

Heterophasic propylene copolymers are well known in the art. Such heterophasic propylene copolymers comprise a matrix being either a propylene homopolymer or a random propylene copolymer in which an elastomeric copolymer is dispersed. Thus the polypropylene matrix contains (finely) dispersed inclusions being not part of the matrix and said inclusions contain the elastomer. The term inclusion indicates that the matrix and the inclusion form different phases within the heterophasic propylene copolymer, said inclusions are for instance visible by high resolution microscopy, like electron microscopy or scanning force microscopy.

One application of the heterophasic propylene copolymers is its use as packaging material. In this market segment, down-gauging and light-weighing is a recurring market need, since it allows for energy and material savings. In order to provide a material equipped with these features, a high stiff material with good impact properties needs to be developed. The high stiffness enables lower wall thicknesses. Furthermore, a cycle time reduction is possible since a certain stiffness needed for demoulding of the specimen is reached at shorter cooling times. However, the impact performance, which determines application performance like drop height, needs to stay on a high level. Additionally, the materials should show high flowability. Otherwise injection moulding of specimen with thin wall thickness is not possible. High flow materials generally show high stiffness due to shorter polymer chains having high stereoregularity. However, the impact performance becomes reduced due to shorter polymer chains, which form less entanglement.

Thus, the object of the present invention is to obtain a material of high flowability and stiffness and good impact performance. In particular, it is an object of the present invention to obtain a material having a high flowability, a high stiffness, a high puncture energy and a high Charpy impact strength.

The foregoing and other objectives are solved by the subject-matter ofthe present invention. Advantageous embodiments of the inventive method are defined in the corresponding subclaims.

The specific finding of the present invention is to provide a heterophasic propylene copolymer (HECO) having a matrix comprising at least three polypropylenes which differ in the melt flow rate and thus setting up a broad molecular weight distribution in the matrix. Further the heterophasic propylene copolymer must comprise two different elastomeric polymers.

According to a first aspect of the present invention, a heterophasic propylene copolymer (HECO) is provided, wherein the heterophasic propylene copolymer (HECO) comprises

(a) a polymer mixture (PM) comprising

(i) a matrix (M) being a polypropylene (PP), said polypropylene (PP) comprises at least three polypropylene fractions (PP1), (PP2) and (PP3), the at least three polypropylene fractions (PP1), (PP2) and (PP3) differ from each other by the melt flow rate $MFR_2$ (230 °C) measured according to ISO 1133, and
(ii) an elastomeric propylene copolymer (EPC) dispersed in said matrix (M), and

(b) a plastomeric olefin copolymer (POC) dispersed in said polymer mixture (PM),

wherein the plastomeric olefin copolymer (POC) is included in the polymer mixture (PM) in an amount of between 1.0 and 5.0 wt.-%, based on the total weight of the heterophasic propylene copolymer (HECO), and wherein the heterophasic propylene copolymer (HECO) has a melt flow rate $MFR_2$ (230 °C) measured according to ISO 1133 of equal or more than 40g/10min.

The terms "polypropylene (PP)", elastomeric propylene copolymer (EPC) and "plastomeric olefin copolymer (POC)" indicate that these polymers chemically differ. For instance the polypropylene (PP) is a crystalline or semi-crystalline polymer and thus not soluble or only to some extent soluble, i.e. equal or below 5.0 wt.-%, in cold xylene wheras the elastomeric propylene copolymer (EPC) and the plastomeric olefin copolymer (POC) are predominantly non-crystalline and thus soluble or readily soluble in cold xylene, i.e. at least 80 wt.-% of the elastomeric propylene copolymer (EPC) and the plastomeric olefin copolymer (POC) are soluble in cold xylene. Further the elastomeric propylene copolymer (EPC) chemically differ also from the plastomeric olefin copolymer (POC). Preferably the elastomeric propylene copolymer (POC) differ from the plastomeric olefin copolymer (POC) in the ethylene content and the flowability, i.e. in the melt flow rate.

The inventors surprisingly found that the foregoing product according to the present invention provides a high flowability, a high stiffness, a high puncture energy and a high Charpy impact strength. More precisely, the inventors found that a heterophasic propylene copolymer (HECO) having a very good flowability/stiffness/impact balance can be obtained if the heterophasic propylene copolymer (HECO) comprises a low amount of a plastomeric olefin copolymer (POC).

Another aspect of the present invention is directed to a process for the preparation of said heterophasic propylene

copolymer (HECO), comprising the step:

blending the polymer mixture (PM) comprising the polypropylene (PP) and the elastomeric propylene copolymer (EPC) with the plastomeric olefin copolymer (POC) and optional additives.

A further aspect of the present invention is directed to an article comprising said heterophasic propylene copolymer (HECO).

A still further aspect of the present invention is directed to the use of the heterophasic propylene copolymer (HECO) as packaging material.

When in the following reference is made to preferred embodiments or technical details of the inventive heterophasic propylene copolymer (HECO), it is to be understood that these preferred embodiments or technical details also refer to the inventive process for the preparation of the heterophasic propylene copolymer (HECO), the inventive article comprising the heterophasic propylene copolymer (HECO) as well as the inventive use of the heterophasic propylene copolymer (HECO) as packaging material. If, for example, it is set out that the inventive heterophasic propylene copolymer (HECO) preferably comprises a polypropylene (PP) having a comonomer content equal or below 1.0 wt.-%, also the heterophasic propylene copolymer (HECO) provided in the inventive process, the inventive article as well as the inventive use preferably comprise a polypropylene (PP) having a comonomer content equal or below 1.0 wt.-%.

According to one preferred embodiment of the present invention, the heterophasic propylene copolymer (HECO) has a melt flow rate $MFR_2$ (230 °C) measured according to ISO 1133 in the range of 40 to 100 g/10 min, preferably in the range of 50 to 90 g/10 min and most preferably in the range of 60 to 90 g/10 min.

According to another preferred embodiment of the present invention, the polypropylene (PP) has (a) a comonomer content equal or below 1.0 wt.-%, and/or (b) a xylene cold soluble (XCS) fraction measured according to ISO 6427 (23 °C) of equal or below 5.0 wt.-%.

According to yet another preferred embodiment of the present invention, (a1) two of the three polypropylene fractions (PP1), (PP2) and (PP3) have a melt flow rate $MFR_2$ (230 °C) measured according to ISO 1133 in the range of equal or above 100 to 500 g/10min, and (b1) one of the three polypropylene fractions (PP1), (PP2) and (PP3) has a melt flow rate $MFR_2$ (230 °C) measured according to ISO 1133 in the range of 1 to equal or below 100 g/10min, preferably (a2) the first polypropylene fraction (PP1) has a melt flow rate $MFR_2$ (230 °C) measured according to ISO 1133 in the range of 200 to 500 g/10min, (b2) the second polypropylene fraction (PP2) has a melt flow rate $MFR_2$ (230 °C) measured according to ISO 1133 in the range of 100 to 400 g/10min, and (c2) the third polypropylene fraction (PP3) has a melt flow rate $MFR_2$ (230 °C) measured according to ISO 1133 in the range of 1 to 100 g/10min.

According to one preferred embodiment of the present invention, (a) one of the polypropylenes (PP1), (PP2) and (PP3) is a propylene homopolymer, preferably two of the polypropylenes (PP1), (PP2) and (PP3) are a propylene homopolymer, more preferably each of the three polypropylenes (PP1), (PP2) and (PP3) is a propylene homopolymer, and/or (b) each of the three polypropylenes (PP1), (PP2) and (PP3) has a xylene cold soluble (XCS) content of equal or below 5.0 wt.-%.

According to another preferred embodiment of the present invention, the elastomeric propylene copolymer (EPC) (a) comprises propylene monomer units and comonomer units selected from ethylene and/or at least one $C_4$ to $C_{12}$ $\alpha$-olefin, and/or (b) is present in the polymer mixture (PM) in an amount of 6.0 to 25.0 wt.-%, preferably 6.0 to 20.0 wt.-% based on the total amount of the polymer mixture (PM) comprising the polypropylene (PP) and the elastomeric propylene copolymer (EPC).

According to yet another preferred embodiment of the present invention, (a) the matrix (M) has a melt flow rate $MFR_2$ (230 °C) measured according to ISO 1133 in the range of 30 to 350 g/10min, and/or (b) the xylene cold soluble fraction (XCS) of the polymer mixture (PM) has a comonomer content of below 45 wt.-%, and/or (c) the polymer mixture (PM) has a xylene cold soluble (XCS) fraction measured according to ISO6427 (23 °C) of equal or below 25.0 wt.-%, preferably equal or below 20.0 wt.-%, and/or (d) the xylene cold soluble fraction (XCS) of the polymer mixture (PM) has an intrinsic viscosity measured according to ISO 1628-1 (at 135 °C in decaline) of equal or higher than 2.0 dl/g, and/or (e) the comonomer content of the polymer mixture (PM) is equal or below 10.0 wt.-%, and/or (f) the heterophasic propylene copolymer (HECO) further comprises an inorganic filler (F), preferably the inorganic filler (F) is selected from mica, wollastonite, kaolinite, smectite, montmorillonite and talc.

According to one preferred embodiment of the present invention, the polypropylene (PP) comprises (a) polypropylene fraction (PP1) in an amount of 20 to 55 wt.-%, and/or (b) polypropylene fraction (PP2) in an amount of 20 to 55 wt.-%, and/or (c) polypropylene fraction (PP3) in an amount of 10 to 30 wt.-%, based on the total amount of the first polypropylene (PP1), the second polypropylene (PP2), and the third polypropylene (PP3).

According to another preferred embodiment of the present invention, the plastomeric olefin copolymer (POC) (a) has a melt flow rate $MFR_2$ (190 °C) measured according to ISO 1133 in the range of 1 to 80 g/10min, and/or (b) is comprised in the polymer mixture (PM) in an amount of 1 to 5 wt.-%, based on the total weight of the heterophasic propylene copolymer (HECO), and/or (c) has a density of below 920 kg/$m^3$.

According to yet another preferred embodiment of the present invention, the plastomeric olefin copolymer (POC) is a plastomer comprising olefin monomer units and comonomer units, wherein the olefin monomer units are selected from ethylene and propylene, preferably ethylene, and the comonomer is selected from $C_2$ to $C_{20}$ $\alpha$-olefins, preferably ethylene, propene, 1-butene, 1-pentene, 1-hexene, 1-heptene and 1-octene, preferably the olefin monomer units are ethylene and the comonomer is selected from propene and 1-octene.

The plastomeric olefin copolymer (POC) comprises

(a) the olefin monomer units are ethylene and the comonomer is selected from propylene and 1-octene, preferably 1-octene, and wherein further the ethylene content is 40 to 80 wt.-% of the plastomeric olefin copolymer (POC) and/or

(b) the olefin monomer units are propylene and the comonomer is ethylene and wherein further the ethylene content is 5.0 to equal or below 20.0 wt.-% of the plastomeric olefin copolymer (POC).

According to one preferred embodiment of the present invention, the weight ratio [PM/POC] of the polymer mixture (PM) and the plastomeric olefin copolymer (POC) is in the range of 20 to 100, more preferably in the range of 30 to 60, more preferably in the range of 40 to 60 and most preferably in the range of 40 to 50.

According to another preferred embodiment of the present invention, the heterophasic propylene copolymer (HECO) comprises (a) 70 to 93 wt.-% of the polypropylene (PP), (b) 6 to 25 wt.-%of the elastomeric propylene copolymer (EPC), and (c) 1 to wt.-% of the plastomeric olefin copolymer (POC), based on the total amount of the polymers present in the the heterophasic propylene copolymer (HECO), preferably based on the polymer mixture (PM) and the plastomeric olefin copolymer (POC).

In the following the invention is described in more detail.

A heterophasic propylene copolymer (HECO) according to this invention comprises a polymer mixture (PM) of a polypropylene (PP) as a matrix (M) and dispersed therein an elastomeric propylene copolymer (EPC). In addition thereto, the heterophasic propylene copolymer (HECO) according to this invention comprises a plastomeric olefin copolymer (POC) dispersed in said polymer mixture (PM). Thus, the heterophasic propylene copolymer (HECO) comprises the polypropylene (PP) matrix containing (finely) dispersed inclusions not being part of the matrix (M) and said inclusions contain the elastomeric propylene copolymer (EPC) and the plastomeric olefin copolymer (POC). The term inclusion indicates that the matrix (M) and the inclusion form different phases within the heterophasic propylene copolymer (HECO), said inclusions are for instance visible by high resolution microscopy, like electron microscopy or scanning force microscopy.

Preferably, the heterophasic propylene copolymer (HECO) according to this invention comprises as polymer components only the polypropylene (PP), the elastomeric propylene copolymer (EPC) and the plastomeric olefin copolymer (POC). In other words, the heterophasic propylene copolymer (HECO) may contain further additives but in a preferred embodiment no other polymer in an amount exceeding 2.0 wt-%, more preferably exceeding 1.0 wt.-%, based on the total weight of the heterophasic propylene copolymer (HECO). One additional polymer which may be present in such low amounts is a polyethylene which is a by-reaction product obtained by the preparation of the polymer mixture (PM) being part of the heterophasic propylene copolymer (HECO) (see in detail below). Accordingly, it is particularly appreciated that the instant heterophasic propylene copolymer (HECO) contains only the polypropylene (PP) matrix, the elastomeric propylene copolymer (EPC), the plastomeric olefin copolymer (POC) and optionally polyethylene in amounts as mentioned in this paragraph.

In one preferred aspect of the present invention, the heterophasic propylene copolymer (HECO) is featured by a rather high melt flow rate. The melt flow rate mainly depends on the average molecular weight. This is due to the fact that long molecules render the material a lower flow tendency than short molecules. An increase in molecular weight means a decrease in the MFR-value. The melt flow rate (MFR) is measured in g/10 min ofthe polymer discharged through a defined die under specified temperature and pressure conditions and the measure of viscosity of the polymer which, in turn, for each type of polymer is mainly influenced by its molecular weight but also by its degree of branching. The melt flow rate measured under a load of 2.16 kg at 230 °C (ISO 1133) is denoted as $MFR_2$ (230 °C). Accordingly, it is preferred that in the present invention the heterophasic propylene copolymer (HECO) has a $MFR_2$ (230 °C) of equal or more than 40 g/10min. For example, the heterophasic propylene copolymer (HECO) has a $MFR_2$ (230 °C) in the range of 40 to 100 g/10min, preferably in the range of 50 to 90 g/10 min and more preferably in the range of 60 to 90 g/10 min.

Preferably it is desired that the heterophasic propylene copolymer (HECO) is thermomechanically stable. Accordingly, it is appreciated that the heterophasic propylene copolymer (HECO) has a melting temperature of at least 160 °C, more preferably of at least 162°C, still more preferably in the range of 163 to 170 °C.

In a further preferred embodiment of the present invention, the heterophasic propylene copolymer (HECO) is preferably featured by a tensile modulus measured according to ISO 527-2 of at least 1,500 MPa, more preferably in the range from 1,500 to 2,500 MPa. For example, the heterophasic propylene copolymer (HECO) is featured by a tensile modulus measured according to ISO 527-2 in the range of 1,600 to 2,000 MPa, preferably in the range of 1,600 to 1,800

MPa.

Additionally or alternatively, the heterophasic propylene copolymer (HECO) is preferably featured by a Charpy notched impact strength measured according to ISO 179 (1eA; 23 °C) of at least 4.0 kJ/$m^2$ and more preferably of at least 4.5 kJ/$m^2$. For example, the heterophasic propylene copolymer (HECO) is featured by a Charpy notched impact strength measured according to ISO 179 (1eA; 23 °C) in the range of 4.5 to 10 kJ/$m^2$, preferably in the range of 5.0 to 8.0 kJ/$m^2$.

Additionally or alternatively, the heterophasic propylene copolymer (HECO) is preferably featured by a Charpy notched impact strength measured according to ISO 179 (1eA; -20 °C) of at least 1.0 kJ/$m^2$ and more preferably of at least 1.5 kJ/$m^2$. For example, the heterophasic propylene copolymer (HECO) is featured by a Charpy notched impact strength measured according to ISO 179 (1eA; -20 °C) in the range of 1.5 to 4.0 kJ/$m^2$, preferably in the range of 1.5 to 3.0 kJ/$m^2$.

Additionally or alternatively, the heterophasic propylene copolymer (HECO) is preferably featured by a puncture energy (+23 °C) determined in the instrumental falling weight (IFW) test according to ISO 6603-2 using injection moulded plaques of 60x60x2 mm of at least 15 J and more preferably of at least 17 J. For example, the heterophasic propylene copolymer (HECO) is featured by a puncture energy (+23 °C) determined in the instrumental falling weight (IFW) test according to ISO 6603-2 using injection moulded plaques of 60x60x2 mm in the range of 15 to 30 J, preferably in the range of 15 to 28 J.

Additionally or alternatively, the heterophasic propylene copolymer (HECO) is preferably featured by a puncture energy (-20 °C) determined in the instrumental falling weight (IFW) test according to ISO 6603-2 using injection moulded plaques of 60x60x2 mm of at least 4, more preferably of at least 5 J. For example, the heterophasic propylene copolymer (HECO) is featured by a puncture energy (-20 °C) determined in the instrumental falling weight (IFW) test according to ISO 6603-2 using injection moulded plaques of 60x60x2 mm in the range of 4 to 12 J, preferably in the range of 5 to 10 J.

The heterophasic propylene copolymer (HECO) is in particular defined by the polymer mixture (PM) comprising the matrix (M) and the elastomeric propylene copolymer (EPC) as well as the plastomeric olefin copolymer (POC) dispersed therein. Accordingly all three components are now defined in more detail.

Like heterophasic propylene copolymer (HECO) the polymer mixture (PM) is also a heterophasic systems in which the polypropylene (PP) as defined herein constitutes the matrix in which the elastomeric propylene copolymer (EPC) is dispersed.

Accordingly, the polymer mixture (PM) being part of the heterophasic propylene copolymer (HECO) comprises apart from propylene also comonomers. Preferably the polymer mixture (PM) being part of the heterophasic propylene copolymer (HECO) comprises apart from propylene ethylene and/or $C_4$ to $C_{12}$ $\alpha$-olefins. Accordingly the term polymer mixture (PM) according to this invention is understood as a polypropylene comprising, preferably consisting of, units derivable from

(a) propylene
and
(b) ethylene and/or $C_4$ to $C_{12}$ $\alpha$-olefins.

Thus, the propylene copolymers according to this invention, i.e. the polymer mixture (PM) being part of the heterophasic propylene copolymer (HECO), comprise monomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably the propylene copolymers according to this invention comprise, especially consist of, monomers copolymerizable with propylene from the group consisting of ethylene, 1-butene and 1-hexene. More specifically the propylene copolymers of this invention comprise - apart from propylene - units derivable from ethylene and/or 1-butene. In a preferred embodiment, the propylene copolymers according to this invention comprise units derivable from ethylene and propylene only. Still more preferably the random propylene copolymer fractions of the matrix - if present - as well as the elastomeric propylene copolymer (EPC) contain the same comonomers, like ethylene.

Accordingly, the elastomeric propylene copolymer (EPC) is preferably an ethylene propylene rubber (EPR), whereas the polypropylene (PP) is either a random propylene copolymer (R-PP) or a propylene homopolymer (H-PP), the latter being preferred.

It is appreciated that the polymer mixture (PM) being part of the heterophasic propylene copolymer (HECO) preferably has a comonomer content equal or below 10.0 wt.-%, more preferably in the range of 2.0 to 10.0 wt.-%, more preferably in the range of 3.0 to 9.0 wt.-%, yet more preferably in the range of 3.5 to 7.0 wt.-%, based on the total amount of the polymer mixture (PM).

The xylene cold soluble (XCS) fraction measured according to ISO6427 (23 °C) of the polymer mixture (PM) being part of the heterophasic propylene copolymer (HECO) is preferably equal or below 25.0 wt.-%, more preferably equal or below 20.0 wt.-%, yet more preferably in the range of 6.0 to 20.0 wt.-%, for example in the range of 9.0 to 18.0 wt.-%, based on the total weight of the polymer mixture (PM) being part of the heterophasic propylene copolymer (HECO).

Additionally or alternatively, the polymer mixture (PM) being part of the heterophasic propylene copolymer (HECO) has a melt flow rate $MFR_2$ (230 °C) measured according to ISO 1133 in the range of 30 to 350 g/10min, preferably in the range of 30 to 250 g/10min, more preferably in the range of 40 to 150 g/10min and most preferably in the range of 40 to 100 g/10min. For example, the polymer mixture (PM) being part of the heterophasic propylene copolymer (HECO) has a melt flow rate $MFR_2$ (230 °C) measured according to ISO 1133 in the range of 60 to 90 g/10min.

The matrix (M) being part of the polymer mixture (PM) is a polypropylene (PP), more preferably a random propylene copolymer (R-PP) or a propylene homopolymer (H-PP), the latter being especially preferred.

For example, the comonomer content of the polypropylene (PP) is equal or below 2.0 wt.-%, more preferably equal or below 1.0 wt.-%, yet more preferably not more than 0.8 wt.-%, still more preferably not more than 0.5 wt.-%. The weight percentage is based on the total weight of the polypropylene (PP).

As mentioned above the polypropylene (PP) is preferably a propylene homopolymer (H-PP).

The expression propylene homopolymer as used throughout the instant invention relates to a polypropylene that consists substantially, i.e. of equal or below than 99.5 wt.-%, of propylene units. In a preferred embodiment only propylene units in the propylene homopolymer are detectable.

In case the polypropylene (PP) is a random propylene copolymer (R-PP), it is appreciated that the random propylene copolymer (R-PP) comprises monomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably the random propylene copolymer (R-PP) according to this invention comprises, especially consists of, monomers copolymerizable with propylene from the group consisting of ethylene, 1-butene and 1-hexene. More specifically the random propylene copolymer (R-PP) ofthis invention comprises - apart from propylene - units derivable from ethylene and/or 1-butene. In a preferred embodiment the random propylene copolymer (R-PP) comprises units derivable from ethylene and propylene only.

Additionally, it is appreciated that the random propylene copolymer (R-PP) has preferably a comonomer content in the range of more than 0.5 to 2.0 wt.-%, more preferably in the range of more than 0.5 to 1.6 wt.-%, yet more preferably in the range of 0.5 to 1.0 wt.-%. The weight percentage is based on the total weight of random propylene copolymer (R-PP).

The term "random" indicates that the comonomers of the propylene copolymer (R-PP), as well as of the first random propylene copolymer (R-PP1), the second random propylene copolymer (R-PP2), and third random propylene copolymer (R-PP3), are randomly distributed within the propylene copolymers. The term random is understood according to IUPAC (Glossary of basic terms in polymer science; IUPAC recommendations 1996).

As stated above the polymer mixture (PM) being part of the heterophasic propylene copolymer (HECO) has a rather high melt flow rate. Accordingly, it is preferred that the polypropylene (PP) has a melt flow rate $MFR_2$ (230 °C) measured according to ISO 1133 in the range of 30 to 350 g/10min, preferably in the range of 30 to 300 g/10 min and most preferably in the range of 70 to 200 g/10 min.

Furthermore, it is appreciated that the matrix (M) of the heterophasic propylene copolymer (HECO) is featured by a moderately broad molecular weight distribution. Accordingly it is appreciated that the matrix of the heterophasic propylene copolymer (HECO), i.e. the polypropylene (PP), has a molecular weight distribution (MWD) of equal or more than 4.0, preferably equal or more than 4.5, more preferably in the range of 4.5 to 10.0, still more preferably in the range of 4.5 to 9.0, for example 5.0 to 8.5.

Additionally the polypropylene (PP) can be defined by its molecular weight. Thus, it is appreciated that the polypropylene (PP) has a weight average molecular weight (Mw) measured by gel permeation chromatography (GPC; ISO 16014-4:2003) of equal or less than 200 kg/mol, more preferably of equal or less than 180 kg/mol, yet more preferably in the range of 75 to 180 kg/mol, still more preferably in the range of 80 to 160 kg/mol.

The xylene cold soluble (XCS) content ofthe polypropylene (PP) is rather moderate. Accordingly, xylene cold soluble (XCS) content is preferably equal or below 5.0 wt.-%, more preferably equal or below 4.5 wt.-% and still more preferably in the range of 0.5 to 5.0 wt.-%. For example, the xylene cold soluble (XCS) content of the polypropylene (PP) is in the range of 0.5 to 4.0 wt.-%, preferably in the range of 1.0 to 4.0 wt.-%, more preferably in the range of 1.5 to 4.0 wt.-% and most preferably in the range of 2.0 to 4.0 wt.-%. The weight percentage is based on the total weight of the polypropylene (PP).

As indicated above the polypropylene (PP) comprises at least three, more preferably comprises three, yet more preferably consists of three, polypropylene fractions (PP1), (PP2), and (PP3), the three polypropylene fractions (PP1), (PP2), and (PP3) differ from each other by the melt flow rate $MFR_2$ (230 °C) measured according to ISO 1133.

However, it is preferred that two of the three polypropylene fractions (PP1), (PP2) and (PP3) have a melt flow rate $MFR_2$ (230 °C) measured according to ISO 1133 in the range of 100 to 500 g/10min, and one of the three polypropylene fractions (PP1), (PP2) and (PP3) has a melt flow rate $MFR_2$ (230 °C) measured according to ISO 1133 in the range of 1 to 100 g/10min, more preferably in the range of 1 to 75 g/10min, even more preferably in the range of 1 to 60 g/10min and most preferably in the range of 1 to 50 g/10min.

In a preferred embodiment of the present invention, the first polypropylene fraction (PP1) has a melt flow rate $MFR_2$ (230 °C) measured according to ISO 1133 in the range of 100 to 500 g/10min, preferably in the range of 150 to

500 g/10 min, more preferably in the range of 200 to 500 g/10min, yet more preferably in the range of 250 to 500 g/10min, still more preferably in the range of 300 to 500 g/10min and most preferably in the range of 350 to 500 g/10min. For example, the first polypropylene fraction (PP1) has a melt flow rate $MFR_2$ (230 °C) measured according to ISO 1133 in the range of 400 to 500 g/10min.

Furthermore, the second polypropylene fraction (PP2) preferably has a melt flow rate $MFR_2$ (230 °C) measured according to ISO 1133 in the range of 100 to 500 g/10min, preferably in the range of 100 to 400 g/10 min, more preferably in the range of 150 to 400 g/10min, yet more preferably in the range of 200 to 400 g/10min and still more preferably in the range of 250 to 400 g/10min. For example, the second polypropylene fraction (PP2) has a melt flow rate $MFR_2$ (230 °C) measured according to ISO 1133 in the range of 300 to 400 g/10min.

In addition, the third polypropylene fraction (PP3) has preferably a melt flow rate $MFR_2$ (230 °C) measured according to ISO 1133 in the range of 1 to 100 g/10min, preferably in the range of 1 to 75 g/10min, more preferably in the range of 1 to 60 g/10 min, yet more preferably in the range of 1 to 50 g/10min and still more preferably in the range of 1 to 35 g/10min. For example, the third polypropylene fraction (PP3) has a melt flow rate $MFR_2$ (230 °C) measured according to ISO 1133 in the range of 5 to 30 g/10min.

In one preferred embodiment of the present invention, the polypropylene (PP) consists of three polypropylene fractions (PP1), (PP2), and (PP3), wherein the first polypropylene fraction (PP1) has a melt flow rate $MFR_2$ (230 °C) measured according to ISO 1133 in the range of 400 to 500 g/10min, the second polypropylene fraction (PP2) has a melt flow rate $MFR_2$ (230 °C) measured according to ISO 1133 in the range of 300 to below 400 g/10min and the third polypropylene fraction (PP3) has a melt flow rate $MFR_2$ (230 °C) measured according to ISO 1133 in the range of 5 to 30 g/10min.

Preferably the melt flow rate $MFR_2$ (230 °C) decreases from the first polypropylene fraction (PP1) to the third polypropylene fraction (PP3). Accordingly, the ratio between the melt flow rate $MFR_2$ (230 °C) of the first polypropylene fraction (PP1) and the third polypropylene fraction (PP3) [MFR (PP1) / MFR (PP3)] is preferably at least 5, more preferably at least 10, yet more preferably at least 15. For example, the ratio between the melt flow rate $MFR_2$ (230 °C) of the first polypropylene fraction (PP1) and the third polypropylene fraction (PP3) [MFR (PP1) / MFR (PP3)] is in the range of 15 to 25. Additionally or alternatively, the ratio between the melt flow rate $MFR_2$ (230 °C) of the first polypropylene fraction (PP1) and the second polypropylene fraction (PP2) [MFR (PP1) / MFR (PP2)] is preferably below 5, more preferably below 4, yet more preferably below 3 and still more preferably below 2. For example, the ratio between the melt flow rate $MFR_2$ (230 °C) of the first polypropylene fraction (PP1) and the second polypropylene fraction (PP2) [MFR (PP1) / MFR (PP2)] is in the range of 1.0 to 1.5, preferably above 1.0 to 1.5. Additionally or alternatively, the ratio between the melt flow rate $MFR_2$ (230 °C) of the second polypropylene fraction (PP2) and the third polypropylene fraction (PP3) [MFR (PP2) / MFR (PP3)] is preferably at least 5, more preferably at least 10, yet more preferably at least 15. For example, the ratio between the melt flow rate $MFR_2$ (230 °C) of the second polypropylene fraction (PP2) and the third polypropylene fraction (PP3) [MFR (PP2) / MFR (PP3)] is in the range of 10 to 20.

In one preferred embodiment of the present invention, the ratio between the melt flow rate $MFR_2$ (230 °C) of the first polypropylene fraction (PP1) and the third polypropylene fraction (PP3) [MFR (PP1) / MFR (PP3)] is in the range of 15 to 25, the ratio between the melt flow rate $MFR_2$ (230 °C) of the first polypropylene fraction (PP1) and the second polypropylene fraction (PP2) [MFR (PP1) / MFR (PP2)] is in the range of 1.0 to 1.5, preferably above 1.0 to 1.5, and the ratio between the melt flow rate $MFR_2$ (230 °C) of the second polypropylene fraction (PP2) and the third polypropylene fraction (PP3) [MFR (PP2) / MFR (PP3)] is in the range of 10 to 20.

In another preferred embodiment of the present invention, the melt flow rate $MFR_2$ (230 °C) decreases from the first polypropylene fraction (PP1) to the second polypropylene fraction (PP2) and from the second polypropylene fraction (PP2) to the third polypropylene fraction (PP3). Accordingly the second polypropylene fraction (PP2) preferably has a lower melt flow rate $MFR_2$ (230 °C) than the first polypropylene fraction (PP1) but a higher melt flow rate $MFR_2$ (230 °C) than the third polypropylene fraction (PP3).

Thus, the third polypropylene fraction (PP3) preferably has the lowest melt flow rate $MFR_2$ (230 °C) ofthe three polypropylenes fractions (PP1), (PP2), and (PP3), more preferably of all polymers present in the polypropylene (PP).

Preferably, at least one of the polypropylene fractions (PP1), (PP2), and (PP3) is a propylene homopolymer. More preferably, two of the polypropylenes (PP1), (PP2) and (PP3) are a propylene homopolymer and most preferably all polypropylene fractions (PP1), (PP2) and (PP3) are propylene homopolymers.

Thus, in a preferred embodiment of the present invention, the matrix (M), i.e. the polypropylene (PP), of the polymer mixture (PM) being part of the heterophasic propylene copolymer (HECO) comprises

(a) a first polypropylene fraction (PP1) being a first propylene homopolymer (H-PP1) or a first random propylene copolymer (R-PP1),

(b) a second polypropylene fraction (PP2) being a second propylene homopolymer (H-PP2) or a second random propylene copolymer (R-PP2),

(c) a third polypropylene fraction (PP3) being a third propylene homopolymer (H-PP3) or a third random propylene

copolymer (R-PP3),

with the proviso that at least one of the three fractions PP1, PP2, and PP3 is a propylene homopolymer, preferably at least the first polypropylene fraction (PP 1) is a propylene homopolymer, more preferably all three fractions (PP1), (PP2), and (PP3) are propylene homopolymers.

As mentioned above, it is in particular preferred that at least the first polypropylene fraction (PP1) is a propylene homopolymer, a so called first propylene homopolymer (H-PP1). Even more preferred this first polypropylene fraction (PP1) has the highest melt flow rate $MFR_2$ (230 °C) of the three polypropylenes (PP1), (PP2), and (PP3).

Still more preferred, in addition to the first polypropylene fraction (PP1) either the second polypropylene fraction (PP2) or the third polypropylene fraction (PP3) is a propylene homopolymer. In other words, it is preferred that the polypropylene (PP) comprises, preferably consists of, only one polypropylene fraction being a random propylene copolymer. Accordingly either the second polypropylene fraction (PP2) is a propylene homopolymer, so called second propylene homopolymer (H-PP2), or the third polypropylene fraction (PP3) is a propylene homopolymer, so called third propylene homopolymer (H-PP3).

It is especially preferred that all three polypropylene fractions (PP1), (PP2), and (PP3) are propylene homopolymers.

In the following the three polypropylene fractions (PP1), (PP2), and (PP3) will be described in more detail.

As mentioned above the polypropylene fractions (PP1), (PP2), and (PP3) can be random propylene copolymers or propylene homopolymers. In any case the comonomer content shall be rather low for each of the polypropylene fractions (PP1), (PP2), and (PP3). Accordingly the comonomer content of each of the three polypropylene fractions (PP1), (PP2), and (PP3) is not more than 1.0 wt.-%, yet more preferably not more than 0.8 wt.-%, still more preferably not more than 0.5 wt.-%. In case of the random propylene copolymer fractions (R-PP1), (R-PP2), and (R-PP3) it is appreciated that the comonomer content for each ofthe random propylene copolymer fractions (R-PP1), (R-PP2), and (R-PP3) is in the range of more than 0.2 to 3.0 wt.-%, more preferably in the range of more than 0.2 to 2.5 wt.-%, yet more preferably in the range of 0.2 to 2.0 wt.-%. The weight percentage is based on the weight of the respective random propylene copolymer fraction.

The (R-PP1), (R-PP2), and (R-PP3) comprise independently from each other monomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably (R-PP1), (R-PP2), and (R-PP3) comprise independently from each other, especially consists independently from each other of, monomers copolymerizable with propylene from the group consisting of ethylene, 1-butene and 1-hexene. More specifically, the (R-PP1), (R-PP2), and (R-PP3) comprise independently from each other - apart from propylene - units derivable from ethylene and/or 1-butene. In a preferred embodiment of the present invention, the (R-PP1), (R-PP2), and (R-PP3) have apart from propylene the same comonomers. Thus, in an especially preferred embodiment the (R-PP1), (R-PP2), and (R-PP3) comprise units derivable from ethylene and propylene only.

As stated above the first polypropylene fraction (PP1) is a random propylene copolymer fraction (R-PP1) or a propylene homopolymer fraction (H-PP1), the latter being preferred.

The xylene cold soluble (XCS) content of the first polypropylene fraction (PP1) is preferably equal or below 5 wt.-%, more preferably equal or below 4 wt.-%, still more preferably in the range of 0.8 to 5 wt.-%, like in the range of 0.8 to 4 wt.-%. The weight percentage is based on the weight of the first polypropylene fraction (PP1).

As stated above the first polypropylene fraction (PP1) is featured by a rather high melt flow rate $MFR_2$ (230 °C). Accordingly it is appreciated that the melt flow rate $MFR_2$ (230 °C) measured according to ISO 1133 is equal or more than 100 g/10min, preferably of equal or more than 150 g/10min. Additionally or alternatively, the melt flow rate $MFR_2$ (230 °C) of the first polypropylene fraction (PP1) measured according to ISO 1133 is in the range of 100 to 500 g/10min, preferably in the range of 150 to 500 g/10 min, more preferably in the range of 200 to 500 g/10min, yet more preferably in the range of 250 to 500 g/10min, still more preferably in the range of 300 to 500 g/10min and most preferably in the range of 350 to 500 g/10min. For example, the first polypropylene fraction (PP1) has a melt flow rate $MFR_2$ (230 °C) measured according to ISO 1133 in the range of 400 to 500 g/10min.

Alternatively or additionally the first polypropylene fraction (PP1) is defined by a low molecular weight. Thus, it is appreciated that the first polypropylene fraction (PP 1) has a weight average molecular weight (Mw) measured by gel permeation chromatography (GPC; ISO 16014-4:2003) of equal or less than 130 kg/mol, more preferably of equal or less than 110 kg/mol, yet more preferably in the range of 60 to 110 kg/mol, still more preferably in the range of 70 to 100 kg/mol.

The second polypropylene fraction (PP2) can be a random propylene copolymer fraction (second random propylene copolymer fraction (R-PP2)) or a propylene homopolymer fraction (a second propylene homopolymer fraction (H-PP2)), the latter being preferred.

The xylene cold soluble (XCS) content ofthe second polypropylene fraction (PP2) is preferably equal or below 5 wt.-%, more preferably equal or below 4 wt.-%, still more preferably equal or below 3.5 wt.-%, and most preferably in

the range of 0.8 to 3.5 wt.-%, like in the range of 0.8 to 3.0 wt.-%. The weight percentage is based on the weight of the second polypropylene fraction (PP2).

As stated above the second polypropylene fraction (PP2) has a melt flow rate $MFR_2$ (230 °C) being higher than the third polypropylene fraction (PP3). Additionally or alternatively, the melt flow rate $MFR_2$ (230 °C) of the first polypropylene fraction (PP1) can be higher or equally the same, preferably higher, as the melt flow rate $MFR_2$ (230 °C) of the second polypropylene fraction (PP2). Accordingly, it is appreciated that the second polypropylene fraction (PP2) has melt flow rate $MFR_2$ (230 °C) measured according to ISO 1133 of equal or more than 100 g/10min, preferably in the range of 100 to 500 g/10 min, more preferably in the range of 100 to 400 g/10min, yet more preferably in the range of 150 to 400 g/10min and still more preferably in the range of 200 to 400 g/10min. For example, the second polypropylene fraction (PP2) has a melt flow rate $MFR_2$ (230 °C) measured according to ISO 1133 in the range of 250 to 400 g/10min, yet more preferably in the range of 300 to 400 g/10min.

The third polypropylene fraction (PP3) can be a random propylene copolymer fraction (third random propylene copolymer fraction (R-PP3)) or a propylene homopolymer fraction (a third propylene homopolymer fraction (H-PP3)), the latter being preferred.

The xylene cold soluble (XCS) content of the third polypropylene fraction (PP3) is preferably equal or below 5 wt.-%, more preferably equal or below 4 wt.-%, still more preferably in the range of 0.8 to 5 wt.-%, for example in the range of 0.8 to 4 wt.-%. The weight percentage is based on the weight of the third polypropylene fraction (PP3).

As stated above, the third polypropylene (PP3) has preferably the lowest melt flow rate $MFR_2$ (230 °C) of the three polypropylene fractions (PP1), (PP2), and (PP3), more preferably the lowest melt flow rate $MFR_2$ (230 °C) of the polymer fractions present in the polypropylene (PP). Accordingly it is appreciated that the third polypropylene (PP3) has melt flow rate $MFR_2$ (230 °C) measured according to ISO 1133 in the range of 1 to 100 g/10min, preferably in the range of 1 to 75 g/10min, more preferably in the range of 1 to 60 g/10 min, yet more preferably in the range of 1 to 50 g/10min and still more preferably in the range of 1 to 35 g/10min. For example, the third polypropylene fraction (PP3) has a melt flow rate $MFR_2$ (230 °C) measured according to ISO 1133 in the range of 5 to 30 g/10min.

Especially good results are obtainable in case the individual fractions are present in specific amounts. Accordingly it is preferred that the amount of the polypropylene fraction having a melt flow rate $MFR_2$ (230 °C) measured according to ISO 1133 in the range of 1.0 to 100 g/10min (preferably in the range of 1 to 75 g/10min, more preferably in the range of 1 to 60 g/10 min, yet more preferably in the range of 1 to 50 g/10min and still more preferably in the range of 1 to 35 g/10min), preferably the amount of the third polypropylene fraction (PP3), is in the range of 10 to 30 wt.-%, more preferably in the range of 15 to 30 wt.-%, still more preferably 20 to 30 wt.-%. The values are based on the total weight of the matrix (M), preferably based on the amount of the polypropylene fractions (PP1), (PP2), and (PP3) together.

Furthermore, it is appreciated that the amount of the polypropylene fraction having a melt flow rate $MFR_2$ (230 °C) measured according to ISO 1133 in the range of 100 to 500 g/10min (preferably in the range of 150 to 500 g/10 min, more preferably in the range of 200 to 500 g/10min, yet more preferably in the range of 250 to 500 g/10min, still more preferably in the range of 300 to 500 g/10min and most preferably in the range of 350 to 500 g/10min), preferably of the first polypropylene fraction (PP1), is in the range of 20 to 55 wt.-%, preferably in the range of 20 to 45 wt.-%, more preferably in the range of 25 to 42 wt.-%, still more preferably in the range of 30 to 42 wt.-%. The values are based on the total weight of the matrix (M), preferably based on the amount of the polypropylene fractions (PP1), (PP2), and (PP3) together.

Finally, the remaining fraction ofthe three polypropylene fractions (PP1), (PP2), and (PP3) having a melt flow rate $MFR_2$ (230 °C) measured according to ISO 1133 in the range of 100 to 400 g/10 min (preferably in the range of 150 to 400 g/10min, more preferably in the range of 200 to 400 g/10min and still more preferably in the range of 250 to 400 g/10min), preferably the second polypropylene fraction (PP2) is present in the range of 20 to 55 wt.-%, preferably in the range of 25 to 55 wt.-%, more preferably 25 to 45 wt.-%, still more preferably 30 to 40 wt.-%. The values are based on the total amount of the matrix (M), i.e., the polypropylene (PP), preferably based on the amount of the polypropylene fractions (PP1), (PP2), and (PP3) together.

Accordingly in a preferred embodiment the weight ratio [PP3/PP1] of the polypropylene fraction having a melt flow rate $MFR_2$ (230 °C) measured according to ISO 1133 is in the range of 1 to 100 g/10min, preferably of the third polypropylene fraction (PP3), and the polypropylene fraction having a melt flow rate $MFR_2$ (230 °C) measured according to ISO 1133 in the range of 100 to 500 g/10min, preferably ofthe first polypropylene fraction (PP1), is in the range of 4/1 to 1/4, more preferably in the range of 3/1 to 1/3 and most preferably in the range of 2/1 to 1/2, for example in the range of 1/1 to 1/2.

Very good results are achievable in case the polypropylene (PP) comprises

(a) 20 to 55 wt.-%, preferably 20 to 45 wt.-%, of the first polypropylene (PP1),
(b) 20 to 55 wt.-%, preferably 25 to 55 wt.-%, of the second polypropylene (PP2), and
(c) 10 to 30 wt.-%, preferably 15 to 30 wt.-%, of the third polypropylene (PP3), based on the total amount of the first polypropylene fraction (PP1), the second polypropylene fraction (PP2), and the third polypropylene fraction (PP3).

In one embodiment, the polypropylene (PP) is produced in a sequential polymerization process, preferably as described in detail below. Accordingly the three polypropylene fractions (PP1), (PP2), and (PP3) are an intimate mixture, which is not obtainable by mechanical blending.

A further essential component of the polymer mixture (PM) being part of the heterophasic propylene copolymer (HECO) is the elastomeric propylene copolymer (EPC) dispersed in the matrix (M), i.e. in the polypropylene (PP).

Concerning the comonomers used in the elastomeric propylene copolymer (EPC) it is referred to the information provided for the heterophasic propylene copolymer (HECO). Accordingly the elastomeric propylene copolymer (EPC) comprises monomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably, the elastomeric propylene copolymer (EPC) comprises, especially consists of, monomers copolymerizable with propylene from the group consisting of ethylene, 1-butene and 1-hexene. More specifically, the elastomeric propylene copolymer (EPC) comprises - apart from propylene - units derivable from ethylene and/or 1-butene. Thus, in an especially preferred embodiment the elastomeric propylene copolymer (EPC) comprises units derivable from ethylene and propylene only.

In one preferred embodiment of the present invention, the polymer mixture (PM) being part of the heterophasic propylene copolymer (HECO) comprises the elastomeric propylene copolymer (EPC) in an amount of between of 6 to 25 wt.-%, more preferably in an amount of between of 6 to 20 wt.-% and most preferably in an amount of between of 6 to 17 wt.-%, based on the total amount of the polymer mixture (PM) comprising the matrix (M) and the elastomeric propylene copolymer (EPC).

The properties of the elastomeric propylene copolymer (EPC) mainly influences the xylene cold soluble (XCS) content of the polymer mixture (PM) being part of the heterophasic propylene copolymer (HECO). Thus, according to the present invention the xylene cold soluble fraction of the polymer mixture (PM) being part of the heterophasic propylene copolymer (HECO) is regarded as the elastomeric propylene copolymer (EPC) ofthe polymer mixture (PM) being part of the heterophasic propylene copolymer (HECO).

Accordingly one important requirement of the present invention is that the elastomeric propylene copolymer (EPC) has a rather high weight average molecular weight. High intrinsic viscosity (IV) values reflect a high weight average molecular weight. Thus, it is appreciated that the xylene cold soluble fraction (XCS) of the polymer mixture (PM) being part of the heterophasic propylene copolymer (HECO) has an intrinsic viscosity (IV) measured according to ISO 1628-1 (at 135 °C in decalin) of equal or higher than 2.0 dl/g, more preferably of equal or higher than 2.4 dl/g, i.e. 2.5 dl/g, still more preferably in the range of 2.4 to 5.0 dl/g, i.e. 2.5 to 5.0 dl/g, like in the range of 2.4 to 4.0, i.e. 2.5 to 4.0 dl/g.

The comonomer content, preferably the ethylene content, within the elastomeric propylene copolymer (EPC) is comparatively low. Accordingly, in a preferred embodiment the comonomer content, more preferably ethylene content, of the xylene cold soluble fraction (XCS) of the polymer mixture (PM) being part of the heterophasic propylene copolymer (HECO) is below 45 wt.-%, more preferably below 40 wt.-%, yet more preferably in the range of 25 to 45 wt.-%, like 30 to 40 wt.-%.

The polymer mixture (PM) being part of the heterophasic propylene copolymer (HECO) according to the present invention preferably comprises,

(a) between 75 and 94 wt.-%, more preferably between 80 and 94 wt.-% and most preferably between 83 and 94 wt.-%, of the matrix (M), i.e. the polypropylene (PP), and

(b) between 6 and 25 wt.-%, more preferably between 6 and 20 wt.-% and most preferably between 6 and 17 wt.-%, of the elastomeric propylene copolymer (EPC), based on the total amount of the polymer mixture (PM) comprising the polypropylene (PP) and the elastomeric propylene copolymer (EPC).

The heterophasic propylene copolymer (HECO) as defined in the instant invention may contain up to 5 wt.-% additives, like nucleating agents and antioxidants, as well as slip agents and inorganic filler (F).

For example, the heterophasic propylene copolymer (HECO) optionally comprise an inorganic filler (F) in amounts of up to 4 wt.-%, preferably in an amount of up to 3 wt.-%, more preferably in the range of 0 to 4 wt.-%, still more preferably 0 to 3 wt.-% and most preferably in the range of 0.5 to 2.5 wt.-%, based on the total weight of the heterophasic propylene copolymer (HECO).

The mineral filler (F) being part of the heterophasic propylene copolymer (HECO) preferably has a cutoff particle size $d_{95}$ [mass percent] of equal or below 20 $\mu$m, more preferably in the range of 0.5 to 10 $\mu$m, like in the range of 0.5 to 8.0 $\mu$m.

Typically the inorganic filler (F) being part of the heterophasic propylene copolymer (HECO) has a surface area measured according to the commonly known BET method with $N_2$ gas as analysis adsorptive of less than 22 $m^2/g$, more preferably of less than 20 $m^2/g$, yet more preferably of less than 18 $m^2/g$. Inorganic fillers (F) fulfilling these requirements are preferably anisotropic mineral fillers, like phyllosilicate, mica or wollastonite.

Preferably, the inorganic filler (F) is selected from the group consisting of mica, wollastonite, kaolinite, smectite, montmorillonite and talc. The most preferred inorganic filler (F) is talc.

A further essential component of the instant heterophasic propylene copolymer (HECO) is the plastomeric olefin copolymer (POC).

The plastomeric olefin copolymer (POC) can be any plastomer. However, in a preferred embodiment of the present invention, the plastomeric olefin copolymer (POC) is plastomer comprising olefin monomer units selected from ethylene and propylene, preferably ethylene, i.e. the plastomeric olefin copolymer (POC) is a plastomeric ethylene copolymer comprising ethylene monomer units and comonomer units and/or a plastomeric propylene copolymer comprising propylene monomer units and comonomer units. The comonomer is preferably selected from $C_2$ to $C_{20}$ $\alpha$-olefins, preferably ethylene, propene, 1-butene, 1-pentene, 1-hexene, 1-heptene and 1-octene, preferably the comonomer is selected from propene and 1-octene.

For example, the plastomeric olefin copolymer (POC) is a plastomeric propylene copolymer comprising propylene monomer units and comonomer units selected from ethylene, 1-butene, 1-pentene, 1-hexene, 1-heptene and 1-octene, preferably the comonomer is selected from 1-octene and ethylen, the latter especially preferred. Preferably the comonomer content, e.g. ethylene content, is 5.0 to equal or below 20.0 wt.-%, more preferably 8.0 to 18.0 wt.-%, like 10.0 to 17.0 wt.-%.

Additionally or alternatively, the plastomeric olefin copolymer (POC) is a plastomeric ethylene copolymer comprising ethylene monomer units and comonomer units selected from $C_3$ to $C_{20}$ $\alpha$-olefins, preferably propene, 1-butene, 1-hexene and 1-octene, or $C_5$ to $C_{20}$ $\alpha,\omega$-alkadienes, preferably 1,7-octadiene. In a more preferred embodiment, the comonomer is selected from propene, 1-butene, 1-hexene, and 1- octene, the latter is especially preferred. The plastomeric ethylene copolymer may contain between 10 to 95 wt.-% ethylene, preferably 20 to 80 wt.-% ethylene, and more preferably 40 to 80 wt.-% ethylene, based on the total amount of the elastomeric polyolefin copolymer. The remaining part to 100 wt.-% consitute the comonomer units.

In a preferred embodiment, the plastomeric olefin copolymer (POC) has a melt flow rate $MFR_2$ (190 °C) measured according to ISO 1133 in the range of 1 to 80 g/10min. More preferably, the plastomeric olefin copolymer (POC) has a melt flow rate $MFR_2$ (190 °C) in the range of 1 to 60 g/10min, more preferably in the range of 1 to 50 g/10min, yet more preferably in the range of 1 to 40 g/10min and most preferably in the range of 1 to 35 g/10min. For example, if the plastomeric olefin copolymer (POC) is a plastomeric propylene copolymer, the plastomeric propylene copolymer preferably has a melt flow rate $MFR_2$ (190 °C) measured according to ISO 1133 in the range of 1 to 40 g/10min, more preferably in the range of 1 to 30 g/10min, yet more preferably in the range of 1 to 20 g/10min and most preferably in the range of 1 to 10 g/10min. For example, if the plastomeric olefin copolymer (POC) is a plastomeric ethylene copolymer, the plastomeric ethylene copolymer preferably has a melt flow rate $MFR_2$ (190 °C) measured according to ISO 1133 in the range of 10 to 60 g/10min, more preferably in the range of 10 to 50 g/10min, yet more preferably in the range of 10 to 40 g/10min and most preferably in the range of 20 to 40 g/10min.

In a further preferred embodiment, the plastomeric olefin copolymer (POC) has an intrinsic viscosity of 0.7 to 2.5 dl/g, preferably 0.8 to 2.0 dl/g, more preferably 0.8 to 1.5 dl/g. The intrinsic viscosity is measured according to DIN ISO 1628/1, October 1999 (in Decalin at 135 °C).

Furthermore, the plastomeric olefin copolymer (POC) has preferably a density of below 920 kg/$m^3$, more preferably of below 900 kg/$m^3$, still more preferably in the range of 800 to 920 kg/$m^3$, yet more preferably in the range of 850 to 900 kg/$m^3$ and most preferably in the range of 860 to 890 kg/$m^3$.

One important aspect of the present invention is that the amount of plastomeric olefin copolymer (POC) in the instant heterophasic propylene copolymer (HECO) is rather low. Accordingly, it is preferred that the plastomeric olefin copolymer (POC) is present in the heterophasic propylene copolymer (HECO) in an amount of between 1.0 and 5.0 wt.-%, preferably in an amount between 1.0 and 4.0 wt.-%, more preferably in an amount between 1.0 and 3.0 wt.-% and most preferably in an amount between 1.5 and 2.5 wt.-%, based on the total weight of the heterophasic propylene copolymer (HECO).

In one preferred embodiment, the weight ratio between the polymer mixture (PM) comprising the polypropylene (PP) as well as the elastomeric propylene copolymer (EPC) and the plastomeric olefin copolymer (POC) ([PM]/[POC]) is more than 10, more preferably more than 20, still more preferable more than 30 and most preferably more than 40. For example, the weight ratio between the polymer mixture (PM) and the plastomeric olefin copolymer (POC) ([PM]/[POC]) is in the range of 20 to 100, more preferably in the range of 30 to 60, more preferably in the range of 40 to 60 and most preferably in the range of 40 to 50.

Accordingly, it is preferred that the heterophasic propylene copolymer (HECO) comprises,

(a) equal or more than 95 wt.-%, preferably between 95 and 99 wt.-%, more preferably between 96 and 99 wt.-%, still more preferably between 97 and 99 wt.-%, and most preferably between 97.5 and 98.5 wt.-%, of the polymer mixture (PM) comprising the matrix (M), i.e. the polypropylene (PP), as well as the elastomeric propylene copolymer (EPC), and

(b) equal or less than 5 wt.-%, preferably between 1 and 5 wt.-%, more preferably between 1 and 4 wt.-%, still more preferably between 1 and 3 wt.-% and most preferably between 1.5 and 2.5 wt.-%, of the plastomeric olefin copolymer

(POC),

based on the total weight of the heterophasic propylene copolymer (HECO), preferably based on the total weight of the polymer mixture (PM) comprising the polypropylene (PP) and the elastomeric propylene copolymer (EPC) and the plastomeric olefin copolymer (POC).

Preferably the amounts are based on the weight of the polymer mixture (PM) comprising the polypropylene (PP) and the elastomeric propylene copolymer (EPC) and the plastomeric olefin copolymer (POC) without any filler (F).

Alternatively, the heterophasic propylene copolymer (HECO) preferably comprises

(a) between 70 and 93 wt.-%, preferably between 75 and 93 wt.-%, more preferably between 80 and 93 wt.-% and most preferably between 80 and 90 wt.-%, of the polypropylene (PP),
(b) between 6 to 25 wt.-%, preferably between 6 and 20 wt.-%, more preferably between 6 and 17 wt.-% and most preferably between 8.5 and 17.5 wt.-%, of the elastomeric propylene copolymer (EPC), and
(c) between 1 to wt.-%, preferably between 1 and 4 wt.-%, more preferably between 1 and 3 wt.-% and most preferably between 1.5 and 2.5 wt.-%, of the plastomeric olefin copolymer (POC),

based on the total weight of the heterophasic propylene copolymer (HECO), preferably based on the total weight of the polymer mixture (PM) comprising the polypropylene (PP) and the elastomeric propylene copolymer (EPC) and the plastomeric olefin copolymer (POC).

Preferably the amounts are based on the weight of the polymer mixture (PM) comprising the polypropylene (PP) and the elastomeric propylene copolymer (EPC) and the plastomeric olefin copolymer (POC) without any filler (F).

The instant invention is further directed to the use of the heterophasic propylene copolymer (HECO) for packing material.

Furthermore, the present invention relates to packing material, like injection-moulded packaging containers like thin-walled injection mouldings, houseware articles and transport packaging, comprising, preferably comprising at least 75 wt.-%, more preferably comprising at least 90 wt.-%, like at least 95 wt.-%, most preferably consists of, a heterophasic propylene copolymer (HECO) as defined in the instant invention.

The heterophasic propylene copolymer (HECO) as defined above is preferably produced by a process as defined below.

The heterophasic propylene copolymer (HECO) according to the present invention can be prepared by a process, comprising the step of blending the polymer mixture (PM) comprising the polypropylene (PP) and the elastomeric propylene copolymer (EPC) with the plastomeric olefin copolymer (POC) and optional additives. The term "blending" refers according to the present invention to the action of providing a blend out of at least two different, pre-existing materials. On the other hand, the term "mixing" includes blending but also includes the in-situ formation of a blend by reacting one material in the presence of another material.

The process according to the present invention may further comprise the step of producing a polymer mixture (PM) according to the instant invention, said polymer mixture (PM) comprises a first polypropylene fraction (PP1), a second polypropylene fraction (PP2) and a third polypropylene fraction (PP3) and an elastomeric propylene copolymer (EPC), wherein said process comprises the steps of:

(a1) polymerizing propylene and optionally at least one ethylene and/or $C_4$ to $C_{12}$ $\alpha$-olefin in a first reactor (R1) obtaining the first polypropylene fraction (PP1),
(b1) transferring the first polypropylene fraction (PP1) into a second reactor (R2),
(c1) polymerizing in the second reactor (R2) and in the presence of said first polypropylene fraction (PP1) propylene and optionally at least one ethylene and/or C4 to $C_{12}$ $\alpha$-olefin obtaining thereby the second polypropylene fraction (PP2), the first polypropylene fraction (PP1) being mixed with the second polypropylene fraction (PP2),
(d1) transferring the mixture of step (c1) into a third reactor (R3),
(e1) polymerizing in the third reactor (R3) and in the presence of the mixture obtained in step (c1) propylene and optionally at least one ethylene and/or $C_4$ to $C_{12}$ $\alpha$-olefin obtaining thereby a third polypropylene (PP3), preferably said third polypropylene (PP3) is a third polypropylene fraction (PP3), the first polypropylene fraction (PP1), the second polypropylene fraction (PP2) and the third polypropylene fraction (PP3) form the polypropylene (PP),
(f1) transferring the polypropylene (PP) into a fourth reactor (R4), and
(g1) polymerizing in the fourth reactor (R4) and in the presence of the polypropylene (PP) propylene and at least one ethylene and/or a $C_4$ to $C_{12}$ $\alpha$-olefin obtaining thereby an elastomeric propylene copolymer (EPC), the polypropylene (PP) and the elastomeric propylene copolymer (EPC) form the polymer mixture (PM),
or
(a2) polymerizing propylene and optionally at least one ethylene and/or a $C_4$ to $C_{12}$ $\alpha$-olefin in a first reactor (R1) obtaining the first polypropylene fraction (PP1),

(b2) transferring the first polypropylene fraction (PP1) into a second reactor (R2),

(c2) polymerizing in the second reactor (R2) and in the presence of said first polypropylene fraction (PP1) propylene and optionally at least one ethylene and/or a $C_4$ to $C_{12}$ $\alpha$-olefin obtaining thereby the third polypropylene fraction (PP3), the first polypropylene fraction (PP1) being mixed with the third polypropylene fraction (PP3),

(d2) transferring the mixture of step (c2) into a third reactor (R3),

(e2) polymerizing in the third reactor (R3) and in the presence of the mixture obtained in step (c2) propylene and optionally at least one ethylene and/or a $C_4$ to $C_{12}$ $\alpha$-olefin obtaining thereby a second polypropylene fraction (PP2), the first polypropylene fraction (PP1), the second polypropylene fraction (PP2) and the third polypropylene fraction (PP3) form the polypropylene (PP),

(f2) transferring the polypropylene (PP) into a fourth reactor (R4), and (g2) polymerizing in the fourth reactor (R4) and in the presence of the polypropylene (PP) propylene and at least one ethylene and/or a $C_4$ to $C_{12}$ $\alpha$-olefin obtaining thereby an elastomeric propylene copolymer (EPC), the polypropylene (PP) and the elastomeric propylene copolymer (EPC) form the polymer mixture (PM).

Preferably between the second reactor (R2) and the third reactor (R3) and optionally between the third reactor (R3) and fourth reactor (R4) the monomers are flashed out.

For preferred embodiments of the heterophasic propylene copolymer (HECO), the polypropylene (PP), the first polypropylene fraction (PP 1), the second polypropylene fraction (PP2), and the third polypropylene fraction (PP3), as well as for the elastomeric propylene copolymer (EPC) reference is made to the definitions given above.

The term "sequential polymerization process" indicates that the polypropylene is produced in at least four reactors connected in series. Accordingly the present process comprises at least a first reactor (R1), a second reactor (R2), a third reactor (R3) and a fourth reactor (R4). The term "polymerization reactor" shall indicate that the main polymerization takes place. Thus, in case the process consists of four polymerization reactors, this definition does not exclude the option that the overall process comprises for instance a pre-polymerization step in a prepolymerization reactor. The term "consist of" is only a closing formulation in view of the main polymerization reactors.

The first reactor (R1) is preferably a slurry reactor (SR) and can be any continuous or simple stirred batch tank reactor or loop reactor operating in bulk or slurry. Bulk means a polymerization in a reaction medium that comprises of at least 60 % (w/w) monomer. According to the present invention the slurry reactor (SR) is preferably a (bulk) loop reactor (LR).

The second reactor (R2), the third reactor (R3) and the fourth reactor (R4) are preferably gas phase reactors (GPR). Such gas phase reactors (GPR) can be any mechanically mixed or fluid bed reactors. Preferably the gas phase reactors (GPR) comprise a mechanically agitated fluid bed reactor with gas velocities of at least 0.2 m/sec. Thus, it is appreciated that the gas phase reactor is a fluidized bed type reactor preferably with a mechanical stirrer.

Thus, in a preferred embodiment the first reactor (R1) is a slurry reactor (SR), like loop reactor (LR), whereas the second reactor (R2), the third reactor (R3) and the fourth reactor (R4) are gas phase reactors (GPR). Accordingly for the instant process at least four, preferably four polymerization reactors, namely a slurry reactor (SR), like loop reactor (LR), a first gas phase reactor (GPR-1), a second gas phase reactor (GPR-2) and a third gas phase reactor (GPR-3) connected in series are used. If needed prior to the slurry reactor (SR) a prepolymerization reactor is placed.

A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol® process of Basell.

Preferably, in the instant process for producing the polypropylene (PP) as defined above the conditions for the first reactor (R1), i.e. the slurry reactor (SR), like a loop reactor (LR), of step (a) may be as follows:

- the temperature is within the range of 50 °C to 110 °C, preferably between 60 °C and 100 °C, more preferably between 68 and 95 °C,
- the pressure is within the range of 20 bar to 80 bar, preferably between 40 bar to 70 bar,
- hydrogen can be added for controlling the molar mass in a manner known per se.

Subsequently, the reaction mixture from step (a) is transferred to the second reactor (R2), i.e. gas phase reactor (GPR-1), i.e. to step (c), whereby the conditions in step (c) are preferably as follows:

- the temperature is within the range of 50 °C to 130 °C, preferably between 60 °C and 100 °C,
- the pressure is within the range of 5 bar to 50 bar, preferably between 15 bar to 35 bar,
- hydrogen can be added for controlling the molar mass in a manner known per se.

The condition in the third reactor (R3) and the fourth reactor (R4), preferably in the second gas phase reactor

(GPR-2) and third gas phase reactor (GPR-4), is similar to the second reactor (R2).

The residence time can vary in the three reactor zones.

In one embodiment of the process for producing the polypropylene the residence time in bulk reactor, e.g. loop is in the range 0.1 to 2.5 hours, e.g. 0.15 to 1.5 hours and the residence time in gas phase reactor will generally be 0.2 to 6.0 hours, like 0.5 to 4.0 hours.

If desired, the polymerization may be effected in a known manner under supercritical conditions in the first reactor (R1), i.e. in the slurry reactor (SR), like in the loop reactor (LR), and/or as a condensed mode in the gas phase reactors (GPR).

Preferably the process comprises also a prepolymerization with the catalyst system, as described in detail below, comprising a Ziegler-Natta procatalyst, an external donor and optionally a cocatalyst.

In a preferred embodiment, the prepolymerization is conducted as bulk slurry polymerization in liquid propylene, i.e. the liquid phase mainly comprises propylene, with minor amount of other reactants and optionally inert components dissolved therein.

The prepolymerization reaction is typically conducted at a temperature of 10 to 60 °C, preferably from 15 to 50 °C, and more preferably from 20 to 45 °C.

The pressure in the prepolymerization reactor is not critical but must be sufficiently high to maintain the reaction mixture in liquid phase. Thus, the pressure may be from 20 to 100 bar, for example 30 to 70 bar.

The catalyst components are preferably all introduced to the prepolymerization step. However, where the solid catalyst component (i) and the cocatalyst (ii) can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is possible to add other components also to the prepolymerization stage. Thus, hydrogen may be added into the prepolymerization stage to control the molecular weight of the prepolymer as is known in the art. Further, antistatic additive may be used to prevent the particles from adhering to each other or to the walls of the reactor.

The precise control of the prepolymerization conditions and reaction parameters is within the skill of the art.

According to the invention the polypropylene (PP) preferably is obtained by a multistage polymerization process, as described above, in the presence of a catalyst system comprising as component (i) a Ziegler-Natta procatalyst which contains a trans-esterification product of a lower alcohol and a phthalic ester.

The procatalyst used according to the invention is prepared by

a) reacting a spray crystallized or emulsion solidified adduct of $MgCl_2$ and a $C_1$-$C_2$ alcohol with $TiCl_4$

b) reacting the product of stage a) with a dialkylphthalate of formula (I)

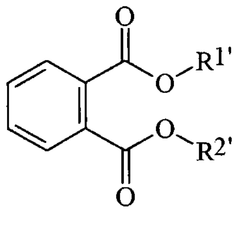

(I)

wherein $R^{1'}$ and $R^{2'}$ are independently at least a $C_5$ alkyl

under conditions where a transesterification between said $C_1$ to $C_2$ alcohol and said dialkylphthalate of formula (I) takes place to form the internal donor

c) washing the product of stage b) or

d) optionally reacting the product of step c) with additional $TiCl_4$.

The procatalyst is produced as defined for example in the patent applications WO 87/07620, WO 92/19653, WO 92/19658 and EP 0 491 566. The content of these documents is herein included by reference.

First an adduct of $MgCl_2$ and a $C_1$-$C_2$ alcohol of the formula $MgCl_2$*nROH, wherein R is methyl or ethyl and n is 1 to 6, is formed. Ethanol is preferably used as alcohol.

The adduct, which is first melted and then spray crystallized or emulsion solidified, is used as catalyst carrier.

In the next step, the spray crystallized or emulsion solidified adduct of the formula $MgCl_2$*nROH, wherein R is methyl or ethyl, preferably ethyl and n is 1 to 6, is contacting with $TiCl_4$ to form a titanized carrier, followed by the steps of

- adding to said titanised carrier

(i) a dialkylphthalate of formula (I) with $R^{1'}$ and $R^{2'}$ being independently at least a $C_5$-alkyl, like at least a $C_8$-alkyl, or preferably

(ii) a dialkylphthalate of formula (I) with $R^{1'}$ and $R^{2'}$ being the same and being at least a $C_5$-alkyl, like at least a $C_8$-alkyl,

or more preferably

(iii) a dialkylphthalate of formula (I) selected from the group consisting of propylhexylphthalate (PrHP), dioctylphthalate (DOP), di-iso-decylphthalate (DIDP), and ditridecylphthalate (DTDP), yet more preferably the dialkylphthalate of formula (I) is a dioctylphthalate (DOP), like di-iso-octylphthalate or diethylhexylphthalate, in particular diethylhexylphthalate,

to form a first product,

- subjecting said first product to suitable transesterification conditions, i.e. to a temperature above 100 °C, preferably between 100 to 150 °C, more preferably between 130 to 150 °C, such that said methanol or ethanol is transesterified with said ester groups of said dialkylphthalate of formula (I) to form preferably at least 80 mol-%, more preferably 90 mol-%, most preferably 95 mol.-%, of a dialkylphthalate of formula (II)

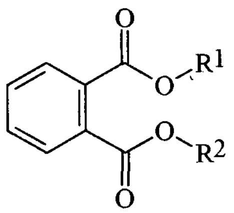

(II)

with $R^1$ and $R^2$ being methyl or ethyl, preferably ethyl,
the dialkylphthalat of formula (II) being the internal donor and

- recovering said transesterification product as the procatalyst composition (component (i)).

The adduct of the formula $MgCl_2$*nROH, wherein R is methyl or ethyl and n is 1 to 6, is in a preferred embodiment melted and then the melt is preferably injected by a gas into a cooled solvent or a cooled gas, whereby the adduct is crystallized into a morphologically advantageous form, as for example described in WO 87/07620.

This crystallized adduct is preferably used as the catalyst carrier and reacted to the procatalyst useful in the present invention as described in WO 92/19658 and WO 92/19653.

As the catalyst residue is removed by extracting, an adduct of the titanised carrier and the internal donor is obtained, in which the group deriving from the ester alcohol has changed.

In case sufficient titanium remains on the carrier, it will act as an active element of the procatalyst.

Otherwise the titanization is repeated after the above treatment in order to ensure a sufficient titanium concentration and thus activity.

Preferably the procatalyst used according to the invention contains 2.5 wt.-% of titanium at the most, preferably 2.2% wt.-% at the most and more preferably 2.0 wt.-% at the most. Its donor content is preferably between 4 to 12 wt.-% and more preferably between 6 and 10 wt.-%.

More preferably the procatalyst used according to the invention has been produced by using ethanol as the alcohol and dioctylphthalate (DOP) as dialkylphthalate of formula (I), yielding diethyl phthalate (DEP) as the internal donor compound.

Still more preferably the catalyst used according to the invention is the BCF20P catalyst of Borealis (prepared according to WO 92/19653 as disclosed in WO 99/24479; especially with the use of dioctylphthalate as dialkylphthalate of formula (I) according to WO 92/19658) or the catalyst Polytrack 8502, commercially available from Grace.

For the production of the polypropylene (PP) according to the invention the catalyst system used preferably comprises in addition to the special Ziegler-Natta procatalyst an organometallic cocatalyst as component (ii).

Accordingly, it is preferred to select the cocatalyst from the group consisting of trialkylaluminium, like triethylaluminium (TEA), dialkyl aluminium chloride and alkyl aluminium sesquichloride.

Component (iii) of the catalysts system used is an external donor represented by formula (IIIa) or (IIIb). Formula (IIIa) is defined by

$$Si(OCH_3)_2R_2^5 \qquad (IIIa)$$

wherein $R^5$ represents a branched-alkyl group having 3 to 12 carbon atoms, preferably a branched-alkyl group having 3 to 6 carbon atoms, or a cyclo-alkyl having 4 to 12 carbon atoms, preferably a cyclo-alkyl having 5 to 8 carbon atoms.

It is particularly preferred that $R^5$ is selected from the group consisting of iso-propyl, iso-butyl, iso-pentyl, tert.-butyl, tert.-amyl, neopentyl, cyclopentyl, cyclohexyl, methylcyclopentyl and cyclohepyl.

Formula (IIIb) is defined by

$$Si(OCH_2CH_3)_3(NR^xR^y) \qquad (IIIb)$$

wherein $R^x$ and $R^y$ can be the same or different a represent a hydrocarbon group having 1 to 12 carbon atoms.

$R^x$ and $R^y$ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R^x$ and $R^y$ are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl.

More preferably both $R^x$ and $R^y$ are the same, yet more preferably both $R^x$ and $R^y$ are an ethyl group.

More preferably the external donor of formula (IIIb) is diethylaminotriethoxysilane .

More preferably the external donor is selected from the group consisting of diethylaminotriethoxysilane $[Si(OCH_2CH_3)_3(N(CH_2CH_3)_2)]$, dicyclopentyl dimethoxy silane $[Si(OCH_3)_3$(cyclo-pentyl)$_2]$, diisopropyl dimethoxy silane $[Si(OCH_3)_2(CH(CH_3)_2)_2]$ and mixtures thereof.

In a further embodiment, the Ziegler-Natta procatalyst can be modified by polymerising a vinyl compound in the presence of the catalyst system, comprising the special Ziegler-Natta procatalyst (component (i)), an external donor (component (iii) and optionally a cocatalyst (component (iii)), which vinyl compound has the formula:

$$CH_2=CH-CHR^3R^4$$

wherein $R^3$ and $R^4$ together form a 5- or 6-membered saturated, unsaturated or aromatic ring or independently represent an alkyl group comprising 1 to 4 carbon atoms, and the modified catalyst is used for the preparation of the heterophasic propylene copolymer according to this invention. The polymerized vinyl compound can act as an $\alpha$-nucleating agent.

Concerning the modification of the catalyst, reference is made to the international applications WO 99/24478, WO 99/24479 and particularly WO 00/68315.

Subsequently the obtained polymer mixture (PM) comprising the polypropylene (PP) and the elastomeric propylene copolymer (EPC) is blended with the plastomeric olefin copolymer (POC) and the optional additives. Preferably, the plastomeric olefin copolymer (POC) and the optional additives are mixed into the polymer mixture (PM) prior to or during the extrusion process in a one-step compounding process. Alternatively, a master batch may be formulated, wherein the polymer mixture (PM) is first mixed with the plastomeric olefin copolymer (POC) and only some of the additives.

For mixing, a conventional compounding or blending apparatus, e.g. a Banbury mixer, a 2-roll rubber mill, Buss-co-kneader or a twin screw extruder may be used. The polymer materials recovered from the extruder are usually in the form of pellets. These pellets are then preferably further processed, e.g. by injection molding to generate articles, like packing material, of the inventive heterophasic propylene copolymer (HECO).

The heterophasic propylene copolymer (HECO) according to the invention may be pelletized and compounded using any of the variety of compounding and blending methods well known and commonly used in the resin compounding art.

In the following the present invention is further illustrated by means of examples.

**Description of the Figures**

Figure 1: illustrates the impact stiffness balance of the inventive heterophasic propylene copolymer (HECO) in comparison to prior art examples at room temperature.

Figure 2: illustrates the impact strength at room temperature versus flowability of the inventive heterophasic propylene copolymer (HECO) in comparison to prior art examples.

**EXAMPLES**

**A. Measuring methods**

The following definitions of terms and determination methods apply for the above general description of the

invention as well as to the below examples unless otherwise defined. **Calculation** of comonomer content of the second polypropylene fraction (PP2):

$$\frac{C(R2) - w(PP1)x\,C(PP1)}{w(PP2)} = C(PP2)$$

wherein

w(PP1) is the weight fraction of the first polypropylene fraction (PP1), i.e. the product of the first reactor (R1),
w(PP2) is the weight fraction of the second polypropylene fraction (PP2), i.e. of the polymer produced in the second reactor (R2),
C(PP1) is the comonomer content [in wt.-%] of the first polypropylene fraction (PP1), i.e. of the product of the first reactor (R1),
C(R2) is the comonomer content [in wt.-%] of the product obtained in the second reactor (R2), i.e. the mixture of the first polypropylene fraction (PP1) and the second polypropylene fraction (PP2),
C(PP2) is the calculated comonomer content [in wt.-%] of the second polypropylene (PP2).

**Calculation** of the xylene cold soluble (XCS) content of the second polypropylene fraction (PP2):

$$\frac{XS(R2) - w(PP1)x\,XS(PP1)}{w(PP2)} = XS(PP2)$$

wherein

w(PP1) is the weight fraction of the first polypropylene fraction (PP1), i.e. the product ofthe first reactor (R1),
w(PP2) is the weight fraction of the second polypropylene fraction (PP2), i.e. of the polymer produced in the second reactor (R2),
XS(PP1) is the xylene cold soluble (XCS) content [in wt.-%] of the first polypropylene fraction (PP1), i.e. of the product of the first reactor (R1),
XS(R2) is the xylene cold soluble (XCS) content [in wt.-%] of the product obtained in the second reactor (R2), i.e. the mixture of the first polypropylene fraction (PP1) and the second polypropylene fraction (PP2),
XS(PP2) is the calculated xylene cold soluble (XCS) content [in wt.-%] of the second polypropylene fraction (PP2).

**Calculation** of melt flow rate $MFR_2$ (230 °C) of the second polypropylene fraction (PP2):

$$MFR(PP2) = 10^{\left[\frac{\log(MFR(R2)) - w(PP1)\,x\,\log(MFR(PP1))}{w(PP2)}\right]}$$

wherein

w(PP1) is the weight fraction of the first polypropylene fraction (PP1), i.e. the product of the first reactor (R1),
w(PP2) is the weight fraction of the second polypropylene fraction (PP2), i.e. of the polymer produced in the second reactor (R2),
MFR(PP1) is the melt flow rate $MFR_2$ (230 °C) [in g/10min] of the first polypropylene fraction (PP1), i.e. ofthe product of the first reactor (R1),
MFR(R2) is the melt flow rate $MFR_2$ (230 °C) [in g/10min] of the product obtained in the second reactor (R2), i.e. the mixture ofthe first polypropylene fraction (PP1) and the second polypropylene fraction (PP2),
MFR(PP2) is the calculated melt flow rate $MFR_2$ (230 °C) [in g/10min] of the second polypropylene fraction (PP2).

**Calculation** of comonomer content of the third polypropylene fraction (PP3):

$$\frac{C(R3) - w(R2)x\,C(R2)}{w(PP3)} = C(PP3)$$

wherein

w(R2) is the weight fraction of the second reactor (R2), i.e. the mixture ofthe first polypropylene fraction (PP1) and the second polypropylene fraction (PP2),

w(PP3) is the weight fraction ofthe third polypropylene fraction (PP3), i.e. of the polymer produced in the third reactor (R3),

C(R2) is the comonomer content [in wt.-%] of the product of the second reactor (R2), i.e. of the mixture of the first polypropylene fraction (PP1) and second polypropylene fraction (PP2),

C(R3) is the comonomer content [in wt.-%] of the product obtained in the third reactor (R3), i.e. the mixture of the first polypropylene fraction (PP1), the second polypropylene fraction (PP2), and the third polypropylene fraction (PP3),

C(PP3) is the calculated comonomer content [in wt.-%] of the third polypropylene fraction (PP3).

**Calculation** of xylene cold soluble (XCS) content of the third polypropylene fraction (PP3):

$$\frac{XS(R3) - w(R2)x\,XS(R2)}{w(PP3)} = XS(PP3)$$

wherein

w(R2) is the weight fraction of the second reactor (R2), i.e. the mixture of the first polypropylene fraction (PP1) and the second polypropylene fraction (PP2),

w(PP3) is the weight fraction of the third polypropylene fraction (PP3), i.e. of the polymer produced in the third reactor (R3),

XS(R2) is the xylene cold soluble (XCS) content [in wt.-%] of the product of the second reactor (R2), i.e. of the mixture of the first polypropylene fraction (PP1) and second polypropylene fraction (PP2),

XS(R3) is the xylene cold soluble (XCS) content [in wt.-%] of the product obtained in the third reactor (R3), i.e. the mixture of the first polypropylene fraction (PP1), the second polypropylene fraction (PP2), and the third polypropylene fraction (PP3),

XS(PP3) is the calculated xylene cold soluble (XCS) content [in wt.-%] of the third polypropylene fraction (PP3).

**Calculation** of melt flow rate $MFR_2$ (230 °C) of the third polypropylene fraction (PP3):

$$MFR(PP3) = 10^{\left[\frac{\log(MFR(R3)) - w(R2)\,x\,\log(MFR(R2))}{w(PP3)}\right]}$$

wherein

w(R2) is the weight fraction of the second reactor (R2), i.e. the mixture of the first polypropylene fraction (PP1) and the second polypropylene fraction (PP2),

w(PP3) is the weight fraction of the third polypropylene fraction (PP3), i.e. of the polymer produced in the third reactor (R3),

MFR(R2) is the melt flow rate $MFR_2$ (230 °C) [in g/10min] of the product of the second reactor (R2), i.e. of the mixture of the first polypropylene fraction (PP1) and second polypropylene fraction (PP2),

MFR(R3) is the melt flow rate $MFR_2$ (230 °C) [in g/10min] of the product obtained in the third reactor (R3), i.e. the mixture of the first polypropylene fraction (PP1), the second polypropylene fraction (PP2), and the third polypropylene fraction (PP3),

MFR(PP3) is the calculated melt flow rate $MFR_2$ (230 °C) [in g/10min] of the third polypropylene fraction (PP3).

**Number average molecular weight ($M_n$), weight average molecular weight ($M_w$) and molecular weight distribution (MWD)** are determined by Gel Permeation Chromatography (GPC) according to the following method:

The weight average molecular weight Mw and the molecular weight distribution (MWD = Mw/Mn wherein Mn is the number average molecular weight and Mw is the weight average molecular weight) is measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/L 2,6-Di tert butyl-4-methyl-phenol) as solvent at 145 °C and at a constant

flow rate of 1 mL/min. 216.5 μL of sample solution were injected per analysis. The column set was calibrated using relative calibration with 19 narrow MWD polystyrene (PS) standards in the range of 0.5 kg/mol to 11 500 kg/mol and a set of well characterized broad polypropylene standards. All samples were prepared by dissolving 5 - 10 mg of polymer in 10 mL (at 160 °C) of stabilized TCB (same as mobile phase) and keeping for 3 hours with continuous shaking prior sampling in into the GPC instrument.

**Density** is measured according to ISO 1183-1 - method A (2004). Sample preparation is done by compression moulding in accordance with ISO 1872-2:2007.

**$MFR_2$ (230 °C)** is measured according to ISO 1133 (230 °C, 2.16 kg load).

**$MFR_2$ (190 °C)** is measured according to ISO 1133 (190 °C, 2.16 kg load).

**Quantification of comonomer content by FTIR spectroscopy**

The comonomer content is determined by quantitative Fourier transform infrared spectroscopy (FTIR) after basic assignment calibrated via quantitative $^{13}C$ nuclear magnetic resonance (NMR) spectroscopy in a manner well known in the art. Thin films are pressed to a thickness of between 100-500 μm and spectra recorded in transmission mode. Specifically, the ethylene content of a polypropylene-co-ethylene copolymer is determined using the baseline corrected peak area of the quantitative bands found at 720-722 and 730-733 $cm^{-1}$. Specifically, the butene or hexene content of a polyethylene copolymer is determined using the baseline corrected peak area of the quantitative bands found at 1377-1379 $cm^{-1}$. Quantitative results are obtained based upon reference to the film thickness.

**The xylene cold solubles (XCS, wt.-%):** Content of xylene cold solubles (XCS) is determined at 25 °C according ISO 16152; first edition; 2005-07-01

**Intrinsic viscosity** is measured according to DIN ISO 1628/1, October 1999 (in Decalin at 135 °C).

**Melting temperature $T_m$, crystallization temperature $T_c$,** is measured with Mettler TA820 differential scanning calorimetry (DSC) on 5-10 mg samples. Both crystallization and melting curves were obtained during 10 °C/min cooling and heating scans between 30 °C and 225 °C. Melting and crystallization temperatures were taken as the peaks of endotherms and exotherms.

Also the melt- and crystallization enthalpy (**Hm and Hc)** were measured by the DSC method according to ISO 11357-3.

**The tensile modulus** is measured at 23 °C according to ISO 527-1 (cross head speed 1 mm/min) using injection moulded specimens according to ISO 527-2(1B), produced according to EN ISO 1873-2 (dog 10 bone shape, 4 mm thickness).

**Charpy notched impact strength** is determined according to ISO 179 / 1eA at 23 °C and at -20 °C by using injection moulded test specimens as described in EN ISO 1873-2 (80 x 10 x 4 mm).

**Puncture energy** is determined in the instrumental falling weight (IFW) test according to ISO 6603-2 using injection moulded plaques of 60x60x2 mm and a test speed of 4.4 m/s. Puncture energy reported results from an integral of the failure energy curve measured at +23°C and -20°C.

**Particle size ($d_{50}$ and cutoff particle size $d_{95}$ (Sedimentation))** is calculated from the particle size distribution [mass percent] as determined by gravitational liquid sedimentation according to ISO 13317-3 (Sedigraph).

**BET** has been measured according to ISO 9277.

**B. Examples**

All polymers were produced in a Borstar pilot plant with a prepolymerization reactor, one slurry loop reactor and three gas phase reactors. The catalyst used in the polymerization process for comparative example C-PP was the commercially available BCF20P catalyst (1.9 wt-% Ti-Ziegler-Natta-catalyst as described in EP 591 224) of Borealis AG with triethylaluminium (TEAL) as cocatalyst and dicyclo pentyl dimethoxy silane (D-Donor) as donor. The catalyst used in the polymerization process for inventive example I-PP was the commercially available BCF55P catalyst (1.9 wt.-% Ti-Ziegler-Natta-catalyst as described in EP 591 224) of Borealis AG with triethylaluminium (TEAL) as cocatalyst and diethylaminotriethoxysilane [$Si(OCH_2CH_3)_3(N(CH_2CH_3)_2)$] (U donor). The preparation of the polymer mixture (PM) comprising the polypropylene (PP) and the elastomeric propylene copolymer (EPC) including the aluminium to donor ratio is described in the following Table 1.

**Table 1:** Preparation ofthe polymer mixture (PM)

| Parameter | unit | 1-PP | C-PP |
|---|---|---|---|
| Donor type | | U | D |
| Al/donor ratio | [mol/mol] | 15 | 15 |

(continued)

| | | | |
|---|---|---|---|
| **Loop** | | | |
| Amount prepared | [wt.-%] | 31 | 37 |
| ethylene feed | [kg/h] | 0 | 0 |
| $MFR_2$ (230 °C) | [g/10min] | 445 | 240 |
| xcs | [wt.-%] | 3.6 | 1.8 |
| **GPR 1** | | | |
| Amount prepared | [wt.-%] | 33 | 31 |
| ethylene feed | [kg/h] | 0 | 0 |
| $MFR_2$ (230 °C) | [g/10min] | 402 | 160 |
| $MFR_2$ of polymer prepared in GPR 1 | [g/10min] | 365 | 100 |
| XCS | [wt.-%] | 3.3 | 1.8 |
| XCS of polymer prepared in GPR 1 | [wt.-%] | 3.0 | 1.8 |
| **GPR 2** | | | |
| Amount prepared | [wt.-%] | 23 | 22 |
| ethylene feed | [kg/h] | 0 | 0 |
| $MFR_2$ (230 °C) | [g/10min] | 183 | 78 |
| $MFR_2$ of polymer prepared in GPR 2 | [g/10min] | 22 | 8.4 |
| XCS | [wt.-%] | 3.6 | 1.7 |
| XCS of polymer prepared in GPR 2 | [wt.-%] | 4.4 | 1.4 |
| **GPR 3** | | | |
| Amount prepared | [wt.-%] | 13 | 10.1 |
| ethylene feed (mol ethylen /kmol propylen) | [mol/kmol] | 250 | 500 |
| $MFR_2$ (230 °C) | [g/10min] | 80 | 47 |
| | | | |
| XCS | [wt.-%] | 15.9 | 11.8 |
| IV of XCS | [dl/g] | 3.3 | 3.1 |
| C2 | [wt.-%] | 5.5 | 4.8 |
| C2 of XCS | [wt.-%] | 33 | 40 |
| Talc content | [wt.-%] | 2 | 0 |

Table 1 summarizes the polymer design of trimodal polypropylenes which are used in the inventive example.

**Table 2:** Compound recipes for inventive and comparative examples

| **Component** | **CE 1** | **CE 2** | **CE 3** | **IE 1** | **IE 2** | **IE 3** | **IE 4** |
|---|---|---|---|---|---|---|---|
| BJ380MO | 100 | - | - | - | - | - | |
| C-PP | - | 100 | - | - | - | - | 98 |
| I-PP | - | - | 100 | 98 | 98 | 98 | |
| Vistamaxx 3000 | - | - | - | 2 | - | - | |
| Engage 8400 | - | - | - | - | 2 | - | |
| Engage 8401 | - | - | - | - | - | 2 | |

(continued)

| Component | CE 1 | CE 2 | CE 3 | IE 1 | IE 2 | IE 3 | IE 4 |
|---|---|---|---|---|---|---|---|
| Vistamaxx 1100 | - | - | - | - | - | - | 2 |

**BJ380MO** is a commercial product of Borealis AG, which is a heterophasic propylene copolymer having a $MFR_2$ (230 °C/2.16 kg) of 80 g/10min and a tensile modulus of 1300 MPa.

**Vistamaxx 3000** is a commercial product of ExxonMobil Chemicals, which is a propylene-based plastomer having a $MFR_2$ (230 °C/2.16 kg) of 7 g/10min, a density of 871 kg/m$^3$ and an ethylene content of 11 wt.-%.

**Vistamaxx 1100** is a commercial product of ExxonMobil Chemicals, which is a random propylene-ethylene-based plastomer having a $MFR_2$ (190 °C/2.16 kg) of 1.3 g/10min, a density of 862 kg/m$^3$ and an ethylene content of 15 wt.-%.

**Engage 8400** is a commercial product of Dow Elastomers, which is an ethylene-1-octene copolymer having a $MFR_2$ (190 °C, 2.16 kg) of 30 g/10min and a density of 870 kg/m$^3$.

**Engage 8401** is a commercial product of Dow Elastomers, which is an ethylene-1-octene copolymer having a $MFR_2$ (190 °C, 2.16 kg) of 30 g/10min and a density of 885 kg/m$^3$.

**Talc** is a commercially talcum "Steamic TICA" available from Luzenac with a $d_{50}$ of 1.8 $\mu$m, a cutoff particle size ($d_{95}$) of 6.2 $\mu$m and a BET of 8.0 m$^2$/g.

The property profiles of the resulting materials are summarized in table 3.

**Table 3:** Property profiles of polymer mixture (PM)/plastomeric olefin copolymer (POC) blends

| Component | unit | CE 1 | CE 2 | CE 3 | IE 1 | IE 2 | IE 3 | IE 4 |
|---|---|---|---|---|---|---|---|---|
| $MFR_2$ (230 °C) | [g/10min] | 80 | 49 | 81 | 75 | 76 | 79 | 45 |
| intrinsic viscosity (XCS) | [wt.-%] | 2.8 | 3.1 | 3.3 | 3.1 | 2.9 | 2.9 | 3.0 |
| Tensile modulus | [MPa] | 1300 | 1770 | 1750 | 1630 | 1645 | 1642 | 1653 |
| Impact strength +23 °C | [kJ/m$^2$] | 4.5 | 3.8 | 3.5 | 5.9 | 5.2 | 5.7 | 5.81 |
| Impact strength -20 °C | [kJ/m$^2$] | 2.5 | 1.9 | 2.0 | 2.0 | 2.1 | 2.1 | 2.43 |
| Puncture energy +23 °C | [J] | 25 | 14.5 | 4 | 18 | 19 | 17 | 25.2 |
| Puncture energy -20 °C | [J] | 12 | 8 | 1 | 5 | 9 | 9 | 8.7 |

In comparison to the commercially available product CE 1, the stiffness of all inventive examples is increased by more than 200 MPa and, furthermore, the charpy room temperature impact is clearly superior to that of CE 1. Furthermore, the addition of a low amount of a plastomeric olefin copolymer (POC), about 100 MPa of stiffness are lost compared to the polypropylene without plastomeric olefin copolymer (CE 3 and CE2), but the notched impact strength could be raised from 3.5 kJ/m$^2$ up to about 6 kJ/m$^2$.

## Claims

**1.** Heterophasic propylene copolymer (HECO) comprising

(a) a polymer mixture (PM) comprising

(i) a matrix (M) being a polypropylene (PP), said polypropylene (PP) comprises at least three polypropylene fractions (PP1), (PP2) and (PP3), the at least three polypropylene fractions (PP1), (PP2) and (PP3) differ from each other by the melt flow rate $MFR_2$ (230 °C) measured according to ISO 1133,
and
(ii) an elastomeric propylene copolymer (EPC) dispersed in said matrix (M),

and
(b) a plastomeric olefin copolymer (POC) dispersed in said polymer mixture (PM), wherein the polypropylene (PP), the elastomeric propylene copolymer (EPC) and the plastomeric olefin copolymer (POC) differ from each

other chemically, and
wherein
(c) the plastomeric olefin copolymer (POC) is included in the polymer mixture (PM) in an amount of between 1.0 and 5.0 wt.-%, based on the total weight of the heterophasic propylene copolymer (HECO),
and
(d) the heterophasic propylene copolymer (HECO) has a melt flow rate $MFR_2$ (230 °C) measured according to ISO 1133 of equal or more than 40 g/10min.

**2.** Heterophasic propylene copolymer (HECO) according to claim 1, wherein the heterophasic propylene copolymer (HECO) has a melt flow rate $MFR_2$ (230 °C) measured according to ISO 1133 in the range of 40 to 100 g/10 min.

**3.** Heterophasic propylene copolymer (HECO) according to claim 1 or 2, wherein the matrix (M) has

(a) a comonomer content equal or below 1.0 wt.-%,
and/or
(b) a xylene cold soluble (XCS) fraction measured according to ISO 6427 (23 °C) of equal or below 5.0 wt.-%.

**4.** Heterophasic propylene copolymer (HECO) according to any one of the preceding claims, wherein

(a1) two of the three polypropylene fractions (PP1), (PP2) and (PP3) have a melt flow rate $MFR_2$ (230 °C) measured according to ISO 1133 in the range of 100 to 500 g/10min, and
(b1) one of the three polypropylene fractions (PP1), (PP2) and (PP3) has a melt flow rate $MFR_2$ (230 °C) measured according to ISO 1133 in the range of 1 to 100 g/10min, preferably
(a2) the first polypropylene fraction (PP1) has a melt flow rate $MFR_2$ (230 °C) measured according to ISO 1133 in the range of 150 to 500 g/10min,
(b2) the second polypropylene fraction (PP2) has a melt flow rate $MFR_2$ (230 °C) measured according to ISO 1133 in the range of 100 to 400 g/10min, and
(c2) the third polypropylene fraction (PP3) has a melt flow rate $MFR_2$ (230 °C) measured according to ISO 1133 in the range of 1 to 100 g/10min.

**5.** Heterophasic propylene copolymer (HECO) according to any one of the preceding claims, wherein

(a) one of the polypropylenes (PP1), (PP2) and (PP3) is a propylene homopolymer, preferably two of the polypropylenes (PP1), (PP2) and (PP3) are a propylene homopolymer, more preferably each of the three polypropylenes (PP1), (PP2) and (PP3) is a propylene homopolymer,
and/or
(b) each of the three polypropylenes (PP1), (PP2) and (PP3) has a xylene cold soluble (XCS) content of equal or below 5 wt.-%.

**6.** Heterophasic propylene copolymer (HECO) according to any one of the preceding claims, wherein the elastomeric propylene copolymer (EPC)

(a) comprises propylene monomer units and comonomer units selected from ethylene and/or at least one $C_4$ to $C_{12}$ $\alpha$-olefin,
and/or
(b) is present in the polymer mixture (PM) in an amount of 6 to 20 wt.-%, determined as the xylene cold soluble (XCS) fraction of the polymer mixture (PM),
and/or
(c) has a comonomer content of below 45 wt.-%, determined as the comonomer content of the xylene cold soluble (XCS) fraction of the polymer mixture (PM),
and/or
(d) has an intrinsic viscosity of equal or higher than 2.0 dl/g, determined as the intrinsic viscosity of the xylene cold soluble fraction (XCS) of the polymer mixture (PM) measured according to ISO 1628-1 (at 135 °C in decaline).

**7.** Heterophasic propylene copolymer (HECO) according to any one of the preceding claims, wherein

(a) the polymer mixture (PM) has a melt flow rate $MFR_2$ (230 °C) measured according to ISO 1133 in the range of 30 to 350 g/10min,

and/or
(b) the heterophasic propylene copolymer (HECO) further comprises an inorganic filler (F), preferably the inorganic filler (F) is selected from mica, wollastonite, kaolinite, smectite, montmorillonite and talc.

**8.** Heterophasic propylene copolymer (HECO) according to any one of the preceding claims, wherein the polypropylene (PP) comprises

(a) polypropylene fraction (PP1) in an amount of 20 to 55 wt.-%,
and/or
(b) polypropylene fraction (PP2) in an amount of 20 to 55 wt.-%,
and/or
(c) polypropylene fraction (PP3) in an amount of 10 to 30 wt.-%,
based on the total amount of the first polypropylene (PP1), the second polypropylene (PP2), and the third polypropylene (PP3).

**9.** Heterophasic propylene copolymer (HECO) according to any one of the preceding claims, wherein the plastomeric olefin copolymer (POC)

(a) has a melt flow rate $MFR_2$ (190 °C) measured according to ISO 1133 in the range of 1 to 80 g/10min,
and/or
(b) is comprised in the polymer mixture (PM) in an amount of 1 to 5 wt.-%, based on the total weight of the heterophasic propylene copolymer (HECO),
and/or
(c) has a density of below 920 kg/$m^3$measured according to ISO 11831 - method A (2004).

**10.** Heterophasic propylene copolymer (HECO) according to any one of the preceding claims, wherein the plastomeric olefin copolymer (POC) is a plastomer comprising olefin monomer units and comonomer units, wherein the olefin monomer units are selected from ethylene and propylene and the comonomer is selected from $C_2$ to $C_{20}$ $\alpha$-olefins, preferably ethylene, propylene, 1-butene, 1-pentene, 1-hexene, 1-heptene and 1-octene, preferably the olefin monomer units are ethylene and the comonomer is selected from propylene and 1-octene.

**11.** Heterophasic propylene copolymer (HECO) according to claim 10, wherein

(a) the olefin monomer units are ethylene and the comonomer is selected from propylene and 1-octene, preferably 1-octene, and wherein further the ethylene content is 40 to 80 wt.-% of the plastomeric olefin copolymer (POC)
and/or
(b) the olefin monomer units are propylene and the comonomer is ethylene and wherein further the ethylene content is 5.0 to equal or below 20.0 wt.-% of the plastomeric olefin copolymer (POC).

**12.** Heterophasic propylene copolymer (HECO) according to any one of the preceding claims, wherein the weight ratio [PM/POC] of the polymer mixture (PM) and the plastomeric olefin copolymer (POC) is in the range of 30 to 60, more preferably in the range of 40 to 60 and most preferably in the range of 40 to 50.

**13.** Heterophasic propylene copolymer (HECO) according to any one of the preceding claims, wherein the heterophasic propylene copolymer (HECO) comprises

(a) 70 to 93 wt.-% of the polypropylene (PP),
(b) 6 to 25 wt.-% of the elastomeric propylene copolymer (EPC),
and
(c) I to 5 wt.-% of the plastomeric olefin copolymer (POC),

based on the total amount of the polymer mixture (PM) comprising the polypropylene (PP) and the clastomeric propylene copolymer (EPC) and the plastomeric olefin copolymer (POC).

**14.** Process for the preparation of a heterophasic propylene copolymer (HECO) according to any one of the preceding claims, comprising the step:

blending the polymer mixture (PM) comprising the polypropylene (PP) and the elastomeric propylene copolymer

(EPC) with the plastomeric olefin copolymer (POC) and optional additives.

**15.** Process for the preparation of a heterophasic propylene copolymer (HECO) according to claim 14, further comprising the steps:

(a1) polymerizing propylene and optionally at least one ethylene and/or $C_4$ to $C_{12}$ $\alpha$-olefin in a first reactor (R1) obtaining the first polypropylene fraction (PP1),
(b1) transferring the first polypropylene fraction (PP1) into a second reactor (R2),
(c1) polymerizing in the second reactor (R2) and in the presence of said first polypropylene fraction (PP 1) propylene and optionally at least one ethylene and/or C4 to $C_{12}$ $\alpha$-olefin obtaining thereby the second polypropylene fraction (PP2), the first polypropylene fraction (PP1) being mixed with the second polypropylene fraction (PP2),
(d1) transferring the mixture of step (c1) into a third reactor (R3),
(e1) polymerizing in the third reactor (R3) and in the presence of the mixture obtained in step (c1) propylene and optionally at least one ethylene and/or $C_4$ to $C_{12}$ $\alpha$-olefin obtaining thereby a third polypropylene (PP3), preferably said third polypropylene (PP3) is a third polypropylene fraction (PP3), the first polypropylene fraction (PP1), the second polypropylene fraction (PP2) and the third polypropylene fraction (PP3) form the polypropylene (PP),
(f1) transferring the polypropylene (PP) into a fourth reactor (R4), and
(g1) polymerizing in the fourth reactor (R4) and in the presence of the polypropylene (PP) propylene and at least one ethylene and/or a $C_4$ to $C_{12}$ $\alpha$-olefin obtaining thereby an elastomeric propylene copolymer (EPC), the polypropylene (PP) and the elastomeric propylene copolymer (EPC) form the polymer mixture (PM),
or
(a2) polymerizing propylene and optionally at least one ethylene and/or a $C_4$ to $C_{12}$ $\alpha$-olefin in a first reactor (R1) obtaining the first polypropylene fraction (PP1),
(b2) transferring the first polypropylene fraction (PP1) into a second reactor (R2),
(c2) polymerizing in the second reactor (R2) and in the presence of said first polypropylene fraction (PP 1) propylene and optionally at least one ethylene and/or a $C_4$ to $C_{12}$ $\alpha$-olefin obtaining thereby the third polypropylene fraction (PP3), the first polypropylene fraction (PP1) being mixed with the third polypropylene fraction (PP3),
(d2) transferring the mixture of step (c2) into a third reactor (R3),
(e2) polymerizing in the third reactor (R3) and in the presence of the mixture obtained in step (c2) propylene and optionally at least one ethylene and/or a $C_4$ to $C_{12}$ $\alpha$-olefin obtaining thereby a second polypropylene fraction (PP2), the first polypropylene fraction (PP 1), the second polypropylene fraction (PP2) and the third polypropylene fraction (PP3) form the polypropylene (PP),
(f2) transferring the polypropylene (PP) into a fourth reactor (R4), and
(g2) polymerizing in the fourth reactor (R4) and in the presence of the polypropylene (PP) propylene and at least one ethylene and/or a $C_4$ to $C_{12}$ $\alpha$-olefin obtaining thereby an elastomeric propylene copolymer (EPC), the polypropylene (PP) and the elastomeric propylene copolymer (EPC) form the polymer mixture (PM).

**16.** Article comprising the heterophasic propylene copolymer (HECO) according to anyone of claims 1 to 13.

**17.** Use of a heterophasic propylene copolymer (HECO) according to anyone of claims 1 to 13 as packaging material.

## Patentansprüche

**1.** Heterophasisches Propylencopolymer (HECO), umfassend:

(a) ein Polymergemisch (PM), umfassend:

(i) eine Matrix (M), welche ein Polypropylen (PP) ist, wobei dieses Polypropylene (PP) mindestens drei Polypropylenfraktionen (PP1), (PP2) und (PP3) umfasst, wobei die mindestens drei Polypropylenfraktionen (PP1), (PP2) und (PP3) sich voneinander in der Schmelzflussrate $MFR_2$ (230°C), gemessen gemäß ISO 1133, unterscheiden, und
(ii) ein elastomeres Propylencopolymer (EPC), welches in der Matrix (M) dispergiert ist,
und

(b) ein plastomeres Olefincopolymer (POC), welches in dem Polymergemisch (M) dispergiert ist, wobei das Polypropylene (PP), das elastomere Propylencopolymer (EPC) und das plastomere Olefincopolymer (POC) sich voneinander chemisch unterscheiden, und wobei

(c) das plastomere Olefincopolymer (POC) in dem Polymergemisch (PM) in einer Menge zwischen 1,0 und 5,0 Gew.-% enthalten ist, basierend auf dem Gesamtgewicht des heterophasischen Propylencopolymers (HECO), und

(d) das heterophasische Propylencopolymer (HECO) eine Schmelzflussrate $MFR_2$ (230°C), gemessen gemäß ISO 1133, von gleich oder mehr als 40 g/10 min aufweist.

**2.** Heterophasisches Propylencopolymer (HECO) gemäß Anspruch 1, wobei das heterophasische Propylencopolymer (HECO) eine Schmelzflussrate $MFR_2$ (230°C), gemessen gemäß ISO 1133, im Bereich von 40 bis 100 g/10 min aufweist.

**3.** Heterophasisches Propylencopolymer (HECO) gemäß Anspruch 1 oder 2, wobei die Matrix (M) aufweist

(a) einen Comonomergehalt von gleich oder weniger als 1,0 Gew.-%, und/oder

(b) einen Xylol kaltlöslichen Anteil (XKL), gemessen gemäß ISO 6427 (23°C) von gleich oder weniger als 5,0 Gew.-%.

**4.** Heterophasisches Propylencopolymer (HECO) gemäß einem der vorstehenden Ansprüche, wobei

(a1) zwei der drei Polypropylenfraktionen (PP1), (PP2) und (PP3) eine Schmelzflussrate $MFR_2$ (230°C), gemessen gemäß ISO 1133, im Bereich von 100 bis 500 g/10 min aufweisen, und

(b 1) eine der drei Polypropylenfraktionen (PP1), (PP2) und (PP3) eine Schmelzflussrate $MFR_2$ (230°C), gemessen gemäß ISO 1133, im Bereich von 1 bis 100 g/10 min aufweist,

wobei vorzugsweise

(a2) die erste Polypropylenfraktion (PP1) eine Schmelzflussrate $MFR_2$ (230°C), gemessen gemäß ISO 1133, im Bereich von 150 bis 500 g/10 min aufweist,

(b2) die zweite Polypropylenfraktion (PP2) eine Schmelzflussrate $MFR_2$ (230°C), gemessen gemäß ISO 1133, im Bereich von 100 bis 400 g/10 min aufweist, und

(c2) die dritte Polypropylenfraktion (PP3) eine Schmelzflussrate $MFR_2$ (230°C), gemessen gemäß ISO 1133, im Bereich von 1 bis 100 g/10 min aufweist.

**5.** Heterophasisches Propylencopolymer (HECO) gemäß einem der vorstehenden Ansprüche, wobei

(a) eines der Polypropylene (PP1), (PP2) und (PP3) ein Propylenhomopolymer ist, vorzugsweise zwei der Polypropylene (PP1), (PP2) und (PP3) ein Propylenhomopolymer sind, stärker bevorzugt jedes der drei Polypropylene (PP1), (PP2) und (PP3) ein Propylenhomopolymer ist,

und/oder

(b) jedes der drei Polypropylene (EP1), (PP2) und (PP3) einen Xylol kaltlöslichen Anteil (XKL) von gleich oder weniger als 5 Gew.-% aufweist.

**6.** Heterophasisches Propylencopolymer (HECO) gemäß einem der vorstehenden Ansprüche, wobei das elastomere Propylencopolymer (EPC)

(a) Propylenmonomereinheiten aufweist und Comonomereinheiten, ausgewählt aus Ethylen und/oder mindestens einem $C_4$ bis $C_{12}$ $\alpha$-Olefin,

und/oder

(b) in den Polymergemisch (PM) in einer Menge von 6 bis 20 Gew.-% vorhanden ist, bestimmt als Xylol kaltlöslicher Anteil (XKL) des Polymergemisches (PM),

und/oder

(c) einen Comonomergehalt von weniger als 45 Gew.-% aufweist, bestimmt als der Comonomergehalt des Xylol kaltlöslichen Anteils (XKL) des Polymergemisches (PM),

und/oder

(d) eine intrinsische Viskosität von gleich oder höher als 2,0 dl/g aufweist, bestimmt als die intrinsische Viskosität des Xylol kaltlöslichen Anteils (XKL) des Polymergemisches (PM), gemessen gemäß ISO 1628-1 (bei 135°C in Decalin).

**7.** Heterophasisches Propylencopolymer (HECO) gemäß einem der vorstehenden Ansprüche, wobei

(a) das Polymergemisch (PM) eine Schmelzflussrate $MFR_2$ (230°C), gemessen gemäß ISO 1133, im Bereich von 30 bis 350 g/10 min aufweist,
und/oder
(b) das heterophasische Propylencopolymer (HECO) weiterhin einen anorganischen Füllstoff (F) umfasst, vorzugsweise anorganischen Füllstoff (F) ausgewählt aus Glimmer, Wollastonit, Kaolinit, Smektit, Montmorillonit und Talk.

**8.** Heterophasisches Propylencopolymer (HECO) gemäß einem der vorstehenden Ansprüche, wobei das Polypropylen (PP) umfasst

(a) die Polypropylenefraktion (PP1) in einer Menge von 20 bis 55 Gew.-%,
und/oder
(b) die Polypropylenfraktion (PP2) in einer Menge von 20 bis 55 Gew.-%, und/oder
(c) die Polypropylenefraktion (PP3) in einer Menge von 10 bis 30 Gew.-%,

basierend auf der Gesamtmenge des ersten Polypropylens (PP1), des zweiten Polypropylens (PP2) und des dritten Polypropylens (PP3).

**9.** Heterophasisches Propylencopolymer (HECO) gemäß einem der vorstehenden Ansprüche, wobei das plastomere Olefincopolymer (POC)

(a) eine Schmelzflussrate $MFR_2$ (190°C), gemessen gemäß ISO 1133, im Bereich von 1 bis 80 g/10 min aufweist,
und/oder
(b) in dem Polymergemisch (PM) in einer Menge von 1 bis 5 Gew.-% vorhanden ist, basierend auf dem Gesamtgewicht des heterophasischen Propylencopolymers (HECO),
und/oder
(c) eine Dichte von weniger als 920 kg/$m^3$ aufweist, gemessen gemäß ISO 11831 - Methode A (2004).

**10.** Heterophasisches Propylencopolymer (HECO) gemäß einem der vorstehenden Ansprüche, wobei das plastomere Olefincopolymer (POC) ein Plastomer ist, umfassend Olefinmonomereinheiten und Comonomereinheiten, wobei die Olefinmonomereinheiten ausgewählt sind aus Ethylen und Propylen und das Comonomer ausgewählt ist aus $C_2$ bis $C_{20}$ $\alpha$-Olefinen, vorzugsweise Ethylen, Propylen, 1-Buten, 1-Penten, 1-Hexen, 1-Hepten und 1-Octen, und vorzugsweise die Olefinmonomereinheiten Ethylen sind und das Comonomer aus Propylen und 1-Octen ausgewählt ist.

**11.** Heterophasisches Propylencopolymer (HECO) gemäß Anspruch 10, wobei

(a) die Olefinmonomereinheiten Ethylen sind und das Comonomer ausgewählt ist aus Propylen und 1-Octen, vorzugsweise 1-Octen, und wobei weiterhin der Ethylengehalt 40 bis 80 Gew.-% des plastomeren Olefincopolymers (POC) beträgt
und/oder
(b) die Olefinmonomereinheiten Propylen sind und das Comonomer Ethylen ist, und wobei weiterhin der Ethylengehalt 5,0 bis gleich oder weniger als 20,0 Gew.-% des plastomeren Olefincopolymers (POC) beträgt.

**12.** Heterophasisches Propylencopolymer (HECO) gemäß einem der vorstehenden Ansprüche, wobei das Gewichtsverhältnis [PM/POC] des Polymergemisches (PM) und des plastomeren Olefincopolymers (POC) im Bereich von 30 bis 60 liegt, stärker bevorzugt im Bereich von 40 bis 60 und am stärksten bevorzugt im Bereich von 40 bis 50.

**13.** Heterophasisches Propylencopolymer (HECO) gemäß einem der vorstehenden Ansprüche, wobei das heterophasische Propylencopolymer (HECO) umfasst

(a) 70 bis 93 Gew.-% des Polypropylens (PP),
(b) 6 bis 25 Gew.-% des elastomeren Propylencopolymers (EPC), und
(c) 1 bis 5 Gew.-% des plastomeren Olefincopolymers (POC), basierend auf der Gesamtmenge des Polymergemisches (PM), umfassend das Polypropylen (PP), und das elastomere Propylencopolymer (EPC) und das plastomere Olefincopolymer (POC).

**14.** Verfahren zur Herstellung eines heterophasischen Propylencopolymers (HECO) gemäß einem der vorstehenden Ansprüche, umfassend den Schritt: Vermischen des Polymergemisches (PM), umfassend das Polypropylen (PP) und das elastomere Propylencopolymer (EPC) mit dem plastomeren Olefincopolymer (POC) und optionalen Additiven.

**15.** Verfahren zur Herstellung eines heterophasischen Propylencopolymers (HECO) gemäß Anspruch 14, weiterhin umfassend die Schritte :

(a1) Polymerisieren von Propylen und gegebenenfalls mindestens einem aus Ethylen und/oder $C_4$ bis $C_{12}$ $\alpha$-Olefin in einem ersten Reaktor (R1), wobei die erste Polypropylenfraktion (PP1) erhalten wird,
(b1) Überführen der ersten Polypropylenfraktion (PP1) in einen zweiten Reaktor (R2),
(c1) Polymerisieren in dem zweiten Reaktor (R2) und in der Gegenwart der ersten Polypropylenfraktion (PP1) von Propylen und gegebenenfalls mindestens einem aus Ethylen und/oder $C_4$ bis $C_{12}$ $\alpha$-Olefin, wobei die zweite Polypropylenfraktion (PP2) erhalten wird und die erste Polypropylenfraktion (PP1) mit der zweiten Polypropylenfraktion (PP2) vermischt wird,
(d1) Überführen des Gemisches aus Schritt (c1) in einen dritten Reaktor (R3),
(i1) Polymerisieren in dem dritten Reaktor (R3) und in der Gegenwart des Gemisches, erhalten in Schritt (C1), von Propylen und gegebenenfalls mindestens einem aus Ethylen und/oder $C_4$ bis $C_{12}$ $\alpha$-Olefin, wobei ein drittes Polypropylen (PP3) erhalten wird, wobei vorzugsweise das dritte Polypropylen (PP3) eine dritte Polypropylenfraktion (PP3) ist, und die erste Polypropylenfraktion (PP1), die zweite Polypropylenfraktion (PP2) und die dritte Polypropylenfraktion (PP3) das Polypropylen (PP) bilden,
(f1) Überführen des Polypropylens (PP) in einen vierten Reaktor (R4), und
(g1) Polymerisieren in dem vierten Reaktor (R4) und in der Gegenwart des Polypropylens (PP) von Propylen und mindestens einem aus Ethylen und/oder einem $C_4$ bis $C_{12}$ $\alpha$-Olefin, wobei ein elastomeres Propylencopolymer (EPC) erhalten wird, und das Polypropylen (PP) und das elastomere Propylencopolymer (EPC) das Polymergemisch (PM) bilden,
oder
(a2) Polymerisieren von Propylen und gegebenenfalls mindestens einem aus Ethylen und/oder einem $C_4$ bis $C_{12}$ $\alpha$-Olefin in einem ersten Reaktor (R1), wobei die erste Polypropylenfraktion (PP1) erhalten wird,
(b2) Überführen der ersten Polypropylenfraktion (PP1) in einen zweiten Reaktor (R2),
(c2) Polymerisieren in dem zweiten Reaktor (R2) und in der Gegenwart der ersten Polypropylenfraktion (PP1) von Propylen und gegebenenfalls mindestens einen aus Ethylen und/oder einem $C_4$ bis $C_{12}$ $\alpha$-Olefin, wobei die dritte Polypropylenfraktion (PP3) erhalten wird, wobei die erste Polypropylenfraktion (PP1) mit der dritten Polypropylenfraktion (PP3) vermischt wird,
(d2) Überführen des Gemisches aus Schritte (c2) in einen dritten Reaktor (R3),
(e2) Polymerisieren in dem dritten Reaktor (R3) und in der Gegenwart des Gemisches, erhalten in Schritte (c2), von Propylen und gegebenenfalls mindestens einem aus Ethylen und/oder einem $C_4$ bis $C_{12}$ $\alpha$-Olefin, wobei eine zweite Polypropylenfraktion (PP2) erhalten wird, und die erste Polypropylenfraktion (PP1) die zweite Polypropylenfraktion (PP2) und die dritte Polypropylenfraktion (PP3) das Polypropylen (PP) bilden,
(f2) Überführen des Polypropylens (PP) in einen vierten Reaktor (R4), und
(g2) Polymerisieren in dem vierten Reaktor (R4) und in der Gegenwart des Polypropylens (PP) von Propylen und mindestens einem aus Ethylen und/oder einem $C_4$ bis $C_{12}$ $\alpha$-Olefin, wobei ein elastomeres Propylencopolymer (EPC) erhalten wird, und das Polypropylen (PP) und das elastomere Propylencopolymer (EPC) das Polymergemisch (PM) bilden.

**16.** Gegenstand umfassend das heterophasische Propylencopolymer (HECO) gemäß einem der Ansprüche 1 bis 13.

**17.** Verwendung eines heterophasischen Propylencopolymers (HECO) gemäß einem der Ansprüche 1 bis 13 als Verpackungsmaterial.

## Revendications

**1.** Copolymère de propylène hétérophasique (HECO) comprenant

(a) un mélange de polymères (PM) comprenant

(i) une matrice (M) qui est un polypropylène (PP), ledit polypropylène (PP) comprenant au moins trois

fractions de polypropylène (PP1), (PP2) et (PP3), les au moins trois fractions de polypropylène (PP1), (PP2) et (PP3) différant les unes des autres par l'indice de fluage $MFR_2$ (230°C), mesuré conformément à la norme ISO 1133,
et
(ii) un copolymère de propylène élastomère (EPC) dispersé dans ladite matrice (M),

et
(b) un copolymère d'oléfine plastomère (POC) dispersé dans ledit mélange de polymères (PM), le polypropylène (PP), le copolymère de propylène élastomère (EPC) et le copolymère d'oléfine plastomère (POC) différant les uns des autres au niveau chimique, et
dans lequel
(c) le copolymère d'oléfine plastomère (POC) est incorporé dans le mélange de polymères (PM) en une quantité comprise entre 1,0 et 5,0 % en poids par rapport au poids total du copolymère de propylène hétérophasique (HECO),
et
(d) lequel copolymère de propylène hétérophasique (HECO) présente un indice de fluage $MFR_2$ (230°C), mesuré conformément à la norme ISO 1133, égal ou supérieur à 40 g/10 min.

**2.** Copolymère de propylène hétérophasique (HECO) selon la revendication 1, lequel copolymère de propylène hétérophasique présente un indice de fluage $MFR_2$ (230°C), mesuré conformément à la norme ISO 1133, situé dans la plage allant de 40 à 100 g/10 min.

**3.** Copolymère de propylène hétérophasique (HECO) selon la revendication 1 ou 2, dans lequel la matrice (M) présente

(a) une teneur en comonomères égale ou inférieure à 1,0 % en poids,
et/ou
(b) une fraction soluble dans le xylène froid (XCS), mesurée conformément à la norme ISO 6427 (23°C), égale ou inférieure à 5,0 % en poids.

**4.** Copolymère de propylène hétérophasique (HECO) selon l'une quelconque des revendications précédentes, dans lequel

(a1) deux ou trois fractions de polypropylène (PP1), (PP2) et (PP3) présentent un indice de fluage $MFR_2$ (230°C), mesuré conformément à la norme ISO 1133, situé dans la plage allant de 100 à 500 g/10 min,
et
(b1) l'une des trois fractions de polypropylène (PP1), (PP2) et (PP3) présente un indice de fluage $MFR_2$ (230°C), mesuré conformément à la norme ISO 1133, situé dans la plage allant de 1 à 100 g/10 min,
de préférence
(a2) la première fraction de polypropylène (PP1) présente un indice de fluage $MFR_2$ (230°C), mesuré conformément à la norme ISO 1133, situé dans la plage allant de 150 à 500 g/10 min,
(b2) la deuxième fraction de polypropylène (PP2) présente un indice de fluage $MFR_2$ (230°C), mesuré conformément à la norme ISO 1133, situé dans la plage allant de 100 à 400 g/10 min, et
(c2) la troisième fraction de polypropylène (PP3) présente un indice de fluage $MFR_2$ (230°C), mesuré conformément à la norme ISO 1133, situé dans la plage allant de 1 à 100 g/10 min.

**5.** Copolymère de propylène hétérophasique (HECO) selon l'une quelconque des revendications précédentes, dans lequel

(a) l'un des polypropylènes (PP1), (PP2) et (PP3) est un homopolymère de propylène, de préférence deux des polypropylènes (PP1), (PP2) et (PP3) sont des homopolymères de propylène, plus préférablement chacun des trois polypropylènes (PP1), (PP2) et (PP3) est un homopolymère de propylène,
et/ou
(b) chacun des trois polypropylènes (PP1), (PP2) et (PP3) présente une teneur en composés solubles dans le xylène froid (XCS) égale ou inférieure à 5 % en poids.

**6.** Copolymère de propylène hétérophasique (HECO) selon l'une quelconque des revendications précédentes, dans lequel le copolymère de propylène élastomère (EPC)

(a) comprend des motifs monomères de propylène et des motifs comonomères choisis parmi l'éthylène et/ou au moins une $\alpha$-oléfine en $C_4$ à $C_{12}$,
et/ou
(b) est présent dans le mélange de polymères (PM) en une quantité de 6 à 20 % en poids, déterminée par la fraction soluble dans le xylène froid (XCS) du mélange de polymères (PM),
et/ou
(c) a une teneur en comonomères inférieure à 45 % en poids, déterminée par la teneur en comonomères de la fraction soluble dans le xylène froid (XCS) du mélange de polymères (PM),
et/ou
(d) présente une viscosité intrinsèque égale ou supérieure à 2,0 dl/g, déterminée par la viscosité intrinsèque de la fraction soluble dans le xylène froid (XCS) du mélange de polymères (PM) mesurée conformément à la norme ISO 1628-1 (à 135°C dans la décaline).

**7.** Copolymère de propylène hétérophasique (HECO) selon l'une quelconque des revendications précédentes, dans lequel

(a) le mélange de polymères (PM) présente un indice de fluage $MFR_2$ (230°C), mesuré conformément à la norme ISO 1133, situé dans la plage allant de 30 à 350 g/10 min, et/ou
(b) lequel copolymère de propylène hétérophasique (HECO) comprend en outre une charge inorganique (F), la charge inorganique (F) étant de préférence choisie parmi le mica, la wollastonite, la kaolinite, la smectite, la montmorillonite et le talc.

**8.** Copolymère de propylène hétérophasique (HECO) selon l'une quelconque des revendications précédentes, dans lequel le polypropylène (PP) comprend

(a) la fraction de polypropylène (PP1) en une quantité de 20 à 55 % en poids,
et/ou
(b) la fraction de polypropylène (PP2) en une quantité de 20 à 55 % en poids,
et/ou
(c) la fraction de polypropylène (PP3) en une quantité de 10 à 30 % en poids,
par rapport à la quantité totale du premier polypropylène (PP1), du deuxième polypropylène (PP2), et du troisième polypropylène (PP3).

**9.** Copolymère de propylène hétérophasique (HECO) selon l'une quelconque des revendications précédentes, dans lequel le copolymère d'oléfine plastomère (POC)

(a) présente un indice de fluage $MFR_2$ (190°C), mesuré conformément à la norme ISO 1133, situé dans la plage allant de 1 à 80 g/10 min,
et/ou
(b) est compris dans le mélange de polymères (PM) en une quantité de 1 à 5 % en poids par rapport au poids total du copolymère de propylène hétérophasique (HECO),
et/ou
(c) présente une masse volumique inférieure à 920 kg/$m^3$, mesurée conformément à la norme ISO 11831, méthode A (2004).

**10.** Copolymère de propylène hétérophasique (HECO) selon l'une quelconque des revendications précédentes, dans lequel le copolymère d'oléfine plastomère (POC) est un plastomère comprenant des motifs monomères d'oléfine et des motifs comonomères, les motifs monomères d'oléfine étant choisis parmi l'éthylène et le propylène et le comonomère étant choisi parmi les $\alpha$-oléfines en $C_2$ à $C_{20}$, de préférence l'éthylène, le propylène, le 1-butène, le 1-pentène, le 1-hexène, le 1-heptène et le 1-octène, de préférence les motifs monomères d'oléfine étant l'éthylène et le comonomère étant choisi parmi le propylène et le 1-octène.

**11.** Copolymère de propylène hétérophasique (HECO) selon la revendication 10, dans lequel

(a) les motifs monomères d'oléfine sont l'éthylène et le comonomère est choisi parmi le propylène et le 1-octène, de préférence le 1-octène, et en outre la teneur en éthylène est de 40 à 80 % en poids du copolymère d'oléfine plastomère (POC),
et/ou

(b) les motifs monomères d'oléfine sont le propylène et le comonomère est l'éthylène, et en outre la teneur en éthylène est de 5,0 à 20,0 % en poids ou moins du copolymère d'oléfine plastomère (POC).

**12.** Copolymère de propylène hétérophasique (HECO) selon l'une quelconque des revendications précédentes, dans lequel le rapport en poids [PM/POC] du mélange de polymères (PM) et du copolymère d'oléfine plastomère (POC) est situé dans la plage allant de 30 à 60, avantageusement dans la plage allant de 40 à 60 et préférentiellement dans la plage allant de 40 à 50.

**13.** Copolymère de propylène hétérophasique (HECO) selon l'une quelconque des revendications précédentes, lequel copolymère de propylène hétérophasique (HECO) comprend

(a) 70 à 93 % en poids du polypropylène (PP),
(b) 6 à 25 % en poids du copolymère de propylène élastomère (EPC),
et
(c) 1 à 5 % en poids du copolymère d'oléfine plastomère (POC),
par rapport à la quantité totale du mélange de polymères (PM) comprenant le polypropylène (PP) et le copolymère de propylène élastomère (EPC) et le copolymère d'oléfine plastomère (POC).

**14.** Procédé pour la préparation d'un copolymère de propylène hétérophasique (HECO) selon l'une quelconque des revendications précédentes, comprenant l'étape de mélange du mélange de polymères (PM) comprenant le polypropylène (PP) et du copolymère de propylène élastomère (EPC) avec le copolymère d'oléfine plastomère (POC) et des additifs optionnels.

**15.** Procédé pour la préparation d'un copolymère de propylène hétérophasique (HECO) selon la revendication 14, comprenant en outre les étapes :

(a1) de polymérisation de propylène et éventuellement d'au moins un éthylène et/ou d'une α-oléfine en $C_4$ à $C_{12}$ dans un premier réacteur (R1), ce qui donne la première fraction de polypropylène (PP1),
(b1) de transfert de la première fraction de polypropylène (PP1) dans un deuxième réacteur (R2),
(c1) de polymérisation, dans le deuxième réacteur (R2) et en présence de ladite première fraction de polypropylène (PP1), de propylène et éventuellement d'au moins un éthylène et/ou d'une α-oléfine en $C_4$ à $C_{12}$, ce qui donne ainsi la deuxième fraction de polypropylène (PP2), la première fraction de polypropylène (PP1) étant mélangée avec la deuxième fraction de polypropylène (PP2), (d1) de transfert du mélange de l'étape (c1) dans un troisième réacteur (R3),
(e1) de polymérisation, dans le troisième réacteur (R3) et en présence du mélange obtenu dans l'étape (c1), de propylène et éventuellement d'au moins un éthylène et/ou d'une α-oléfine en $C_4$ à $C_{12}$, ce qui donne ainsi un troisième polypropylène (PP3), ledit troisième propylène (PP3) étant de préférence une troisième fraction de polypropylène (PP3), et la première fraction de propylène (PP1), la deuxième fraction de polypropylène (PP2) et la troisième fraction de polypropylène (PP3) formant le polypropylène (PP),
(f1) de transfert du polypropylène (PP) dans un quatrième réacteur (R4), et
(g1) de polymérisation, dans le quatrième réacteur (R4) et en présence du polypropylène (PP), de propylène et éventuellement d'au moins un éthylène et/ou d'une α-oléfine en $C_4$ à $C_{12}$, ce qui donne ainsi un copolymère de propylène élastomère (EPC), le polypropylène (PP) et le copolymère de propylène élastomère (EPC) formant le mélange de polymères (PM),
ou
(a2) de polymérisation de propylène et éventuellement d'au moins un éthylène et/ou d'une α-oléfine en $C_4$ à $C_{12}$ dans un premier réacteur (R1), ce qui donne la première fraction de polypropylène (PP1),
(b2) de transfert de la première fraction de polypropylène (PP1) dans un deuxième réacteur (R2),
(c2) de polymérisation, dans le deuxième réacteur (R2) et en présence de ladite première fraction de polypropylène (PP1), de propylène et éventuellement d'au moins un éthylène et/ou d'une α-oléfine en $C_4$ à $C_{12}$, ce qui donne ainsi la troisième fraction de polypropylène (PP3), la première fraction de polypropylène (PP1) étant mélangée avec la troisième fraction de polypropylène (PP3), (d2) de transfert du mélange de l'étape (c2) dans un troisième réacteur (R3),
(e2) de polymérisation, dans le troisième réacteur (R3) et en présence du mélange obtenu dans l'étape (c2), de propylène et éventuellement d'au moins un éthylène et/ou d'une α-oléfine en $C_4$ à $C_{12}$, ce qui donne ainsi une deuxième fraction de polypropylène (PP2), et la première fraction de propylène (PP1), la deuxième fraction de polypropylène (PP2) et la troisième fraction de polypropylène (PP3) formant le polypropylène (PP), (f2) de transfert du polypropylène (PP) dans un quatrième réacteur (R4), et

(g2) de polymérisation, dans le quatrième réacteur (R4) et en présence du polypropylène (PP), de propylène et éventuellement d'au moins un éthylène et/ou d'une $\alpha$-oléfine en $C_4$ à $C_{12}$, ce qui donne ainsi un copolymère de propylène élastomère (EPC), le polypropylène (PP) et le copolymère de propylène élastomère (EPC) formant le mélange de polymères (PM).

**16.** Article comprenant le copolymère de propylène hétérophasique (HECO) selon l'une quelconque des revendications 1 à 13.

**17.** Utilisation d'un copolymère de propylène hétérophasique (HECO) selon l'une quelconque des revendications 1 à 13 en tant que matériau d'emballage.

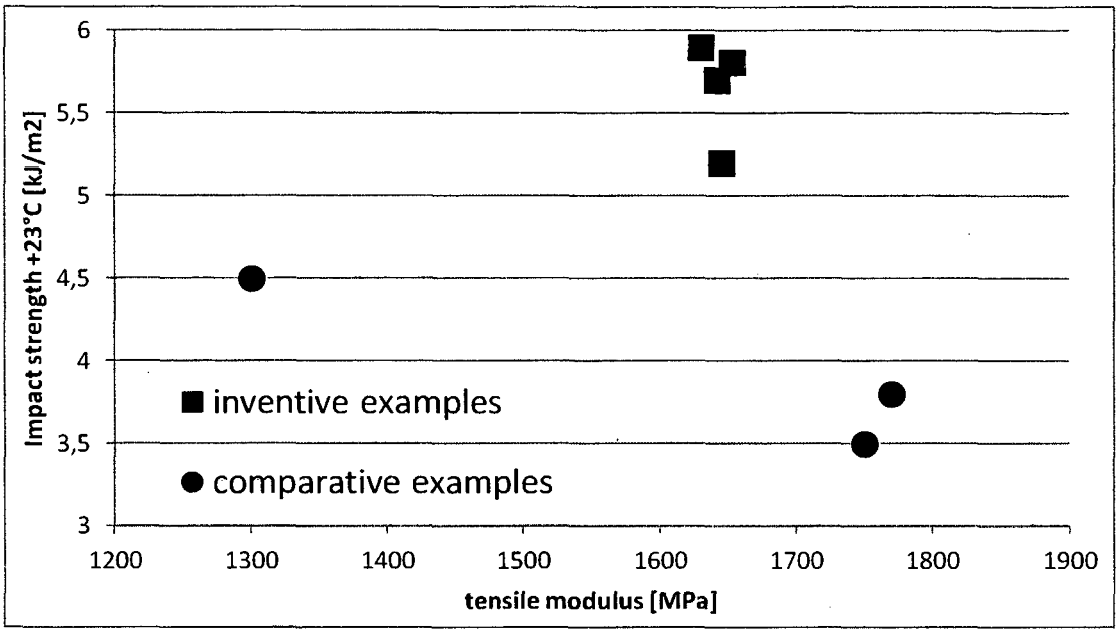


Figure 1: Impact / stiffness balance of the inventive heterophasic propylene copolymer (HECO) in comparison to prior art examples at room temperature.

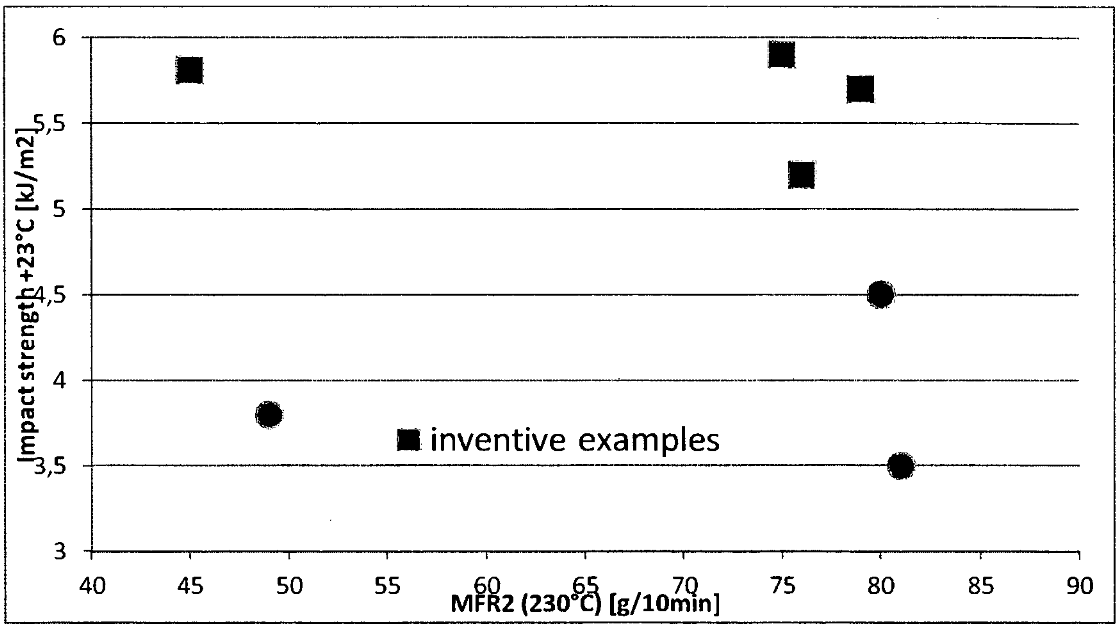


Figure 2: Illustrates the impact strength at room temperature versus flowability of the inventive heterophasic propylene copolymer (HECO) in comparison to prior art examples.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0887379 A
- WO 9212182 A
- WO 2004000899 A
- WO 2004111095 A
- WO 9924478 A
- WO 9924479 A
- WO 0068315 A
- WO 8707620 A
- WO 9219653 A
- WO 9219658 A
- EP 0491566 A
- EP 591224 A